# EUROPEAN PATENT APPLICATION

(11) **EP 4 364 944 A1**
(43) Date of publication of application: **08.05.2024**
(21) Application number: 22833227.6
(22) Date of filing: 29.06.2022
(51) Int. Cl.: B32B 27/40, C09D 175/04, C08G 18/00, C08G 18/28, C08G 18/62, C08G 18/80

(54) **BLOCK POLYISOCYANATE COMPOSITION, RESIN COMPOSITION, RESIN FILM, AND LAYERED BODY**

(30) Priority: 30.06.2021 JP 2021108576; 06.10.2021 JP 2021164797; 19.01.2022 JP 2022006340
(71) Applicant: Asahi Kasei Kabushiki Kaisha, Tokyo 1000006 (JP)
(72) Inventor: HORINOUCHI Misa, Tokyo 100-0006 (JP); YAMAUCHI Masakazu, Tokyo 100-0006 (JP); SHINOMIYA Kie, Tokyo 100-0006 (JP); YOSHINUMA Tomoharu, Tokyo 100-0006 (JP); HARA Kazuyuki, Tokyo 100-0006 (JP)
(74) Representative: Strehl Schübel-Hopf & Partner
(86) International application number: PCT/JP2022/026024
(87) International publication number: WO 2023/277081

(57) **Abstract**

The present invention provides a blocked polyisocyanate composition containing blocked polyisocyanate component (A) and blocked polyisocyanate component (B), wherein when a nonionic hydrophilic group content of blocked polyisocyanate component (A) is represented by (a) mass% and a nonionic hydrophilic group content of blocked polyisocyanate component (B) is represented by (b) mass%, a relationship of 0 ≤ (b) < (a) is satisfied.

## Description

### [Technical field]

The present invention relates to a blocked polyisocyanate composition, a resin composition, a resin film and a laminate.

### [Background Art]

Conventionally, polyurethane resin coating materials have very good abrasion resistance, chemical resistance and stain resistance. In particular, polyurethane resin coating materials using polyisocyanates obtained from aliphatic diisocyanates or alicyclic diisocyanates have superior weather resistance, and the demand for them is on the rise. However, since polyurethane resin coating materials are generally of a two-component type, their use is extremely inconvenient. That is, typical polyurethane resin coating materials are composed of two components, a polyol and a polyisocyanate, and it is necessary to store the polyol and the polyisocyanate separately and mix them at the time of coating. In addition, another problem is that once the two components are mixed, the coating material gels in a short time and becomes unusable. Since polyurethane resin coating materials have such problems, it is extremely difficult to use them for automatic coating in the field of line coating such as automobile coating or weak electric coating. Furthermore, since isocyanates easily react with water, they cannot be used in water-based coating materials such as electrodeposition coating materials. Furthermore, when a coating material containing an isocyanate is used, it is necessary to thoroughly clean the coating machine and coating tank after the work is completed, which significantly reduces work efficiency.

In order to solve the above-described problems, it has been proposed to use blocked polyisocyanates in which all active isocyanate groups are blocked with a blocking agent. This blocked polyisocyanate does not react with polyols at room temperature. However, since by heating, the blocking agent dissociates and the active isocyanate groups are regenerated and react with the polyol to cause a cross-linking reaction, the above-described problem can be resolved. Therefore, many blocking agents have been studied, and typical examples thereof include phenol, methyl ethyl ketoxime and the like.

However, when blocked polyisocyanates containing these blocking agents are used, a baking temperature as high as 140°C or higher is generally required. Requiring baking at a high temperature is not only disadvantageous in terms of energy, but also requires heat resistance of the base material, which is a factor limiting its use.

On the other hand, as low-temperature baking type blocked polyisocyanates, studies have been made on blocked polyisocyanates using active methylene compounds such as acetoacetic esters and malonic acid diesters. For example, Patent Documents 1 and 2 propose blocked polyisocyanate compositions that cure at 90°C.

Moreover, from the viewpoint of global environmental protection, there is an increasing need for water-based resin compositions. In order to ensure dispersibility in water-based resin composition, for example, Patent Document 3 discloses a technique of modifying a blocked polyisocyanate with a hydrophilic group to improve dispersibility in the water-based resin composition.

### [Citation List]

### [Patent document]

[Patent Document 1] Japanese Unexamined Patent Application, First Publication No. 2002-322238
[Patent Document 2] Japanese Unexamined Patent Application, First Publication No. 2006-335954
[Patent Document 3] Japanese Patent Granted Publication No. 3947260

### [Summary of Invention]

### [Technical Problem]

Physical properties required for blocked polyisocyanates include not only curability when baked at a low temperature of 90°C or lower and dispersibility in water-based resin compositions, but also storage stability as water-based resin compositions. However, it is very difficult to satisfy all.

The present invention has been made in view of the above circumstances, and provides a blocked polyisocyanate composition and a resin composition, resin film and laminate using the blocked polyisocyanate composition, the blocked polyisocyanate composition having good dispersibility in water-based resin compositions, excellent curability when baked immediately after being made into a water-based resin composition and after storage at a low temperature of 90°C or lower and excellent curability maintenance (gel fraction retention rate), ability to suppress gas generation when stored as a water-based resin composition, and excellent water resistance when formed into a resin film.

### [Solution to Problem]

That is, the present invention includes the following aspects.
(1) A blocked polyisocyanate composition comprising blocked polyisocyanate component (A) and blocked polyisocyanate component (B), wherein
   when a nonionic hydrophilic group content of blocked polyisocyanate component (A) is represented by (a) mass% and a nonionic hydrophilic group content of blocked polyisocyanate component (B) is represented by (b) mass%, a relationship of 0 ≤ (b) < (a) is satisfied.
(2) The blocked polyisocyanate composition according to (1), wherein the nonionic hydrophilic group content (a) of blocked polyisocyanate component
   (A) is 1.0 to 55.0% by mass,
      the nonionic hydrophilic group content (b) of blocked polyisocyanate component
   (B) is 0 to 20.0% by mass,
      (a)/(b) is 100/0 to 60/40, and
         a mass ratio (A)/(B) of component (A) to component (B) is 1/99 to 99/1.
(3) The blocked polyisocyanate composition according to (1) or (2), wherein
   a nonionic hydrophilic group content of the blocked polyisocyanate composition is 0.1% by mass or more and 25.0% by mass or less with respect to a total mass of a solid content of the blocked polyisocyanate composition.
(4) The blocked polyisocyanate composition according to any one of (1) to (3), wherein
   a blocked isocyanate group structure (X) of blocked polyisocyanate component
   (A) and a blocked isocyanate group structure (Y) of blocked polyisocyanate component
   (B) are different from each other.
(5) The blocked polyisocyanate composition according to any one of (1) to (3), wherein a relationship of 0 < (b) < (a) is satisfied.
(6) The blocked polyisocyanate according to any one of (1) to (4), wherein
   when each of curing temperatures at which each of resin films using blocked polyisocyanate component (A) and blocked polyisocyanate component (B) achieves a gel fraction of 80% by mass or more is represented by (A_{T1}) and (B_{T1}), a relationship of (A_{T1}) > (B_{T1}) is satisfied,
      the gel fraction is expressed as a percentage of a value obtained by dividing a mass of an undissolved portion of a resin film when the resin film is immersed in acetone at 23°C for 24 hours by a mass of the resin film before immersion, and
   the resin film is obtained by a method in which each of blocked polyisocyanate component (A) and blocked polyisocyanate component (B) is blended with an acrylic polyol having a hydroxyl group content of 4.5% by mass at an NCO/OH ratio of 1.0 and adjusted to have a solid content of 50% by mass using butyl acetate, the NCO/OH ratio being a ratio of a molar amount of isocyanate groups of blocked polyisocyanate component (A) or blocked polyisocyanate component (B) to a molar amount of hydroxyl groups of the acrylic polyol, followed by applying each of the adjusted resulting solutions to a polypropylene plate so that the dried film thickness is 40 µm and heating at a temperature of 80°C or higher at an interval of 5°C for 30 minutes to dry.
(7) The blocked polyisocyanate according to any one of (1) to (4), wherein
   when each of curing temperatures at which each of resin films using blocked polyisocyanate component (A) and blocked polyisocyanate component (B) achieves a gel fraction of 80% by mass or more is represented by (A_{T2}) and (B_{T2}), a relationship of (A_{T2}) > (B_{T2}) is satisfied,
   the gel fraction is expressed as a percentage of a value obtained by dividing a mass of an undissolved portion of a resin film when the resin film is immersed in acetone at 23°C for 24 hours by a mass of the resin film before immersion, and
   the resin film is obtained by a method in which each of blocked polyisocyanate component (A) and blocked polyisocyanate component (B) is blended with a polycaprolactone triol having a number-average molecular weight of 850 at an NCO/OH ratio of 1.0 and adjusted to have a solid content of 50% by mass using butyl acetate, the NCO/OH ratio being a ratio of a molar amount of isocyanate groups of blocked polyisocyanate component (A) or blocked polyisocyanate component (B) to a molar amount of hydroxyl groups of the polycaprolactone triol, followed by applying each of the adjusted resulting solutions to a polypropylene plate so that the dried film thickness is 40 µm and heating at a temperature of 80°C or higher at an interval of 5°C for 30 minutes to dry.
(8) The blocked polyisocyanate composition according to any one of (1) to (7), wherein
   the blocked isocyanate group structure (Y) of blocked polyisocyanate component (B) is at least one structure selected from the group consisting of a structure represented by the following general formula (I) and a structure represented by the following general formula (II), and
   when the blocked isocyanate group structure (Y) of blocked polyisocyanate component (B) is at least one structure selected from the group consisting of structures represented by the following general formula (II), a content of the structure represented by the following general formula (11-1) is 1 mol% or more with respect to 100 mol% of the structure represented by the following general formula (11),

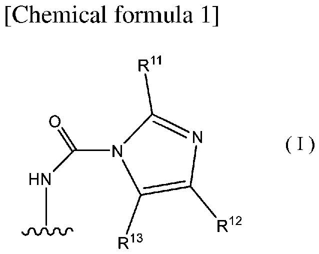

(In general formula (I), R¹¹, R¹² and R¹³ are each independently a hydrogen atom or an alkyl group optionally containing one or more substituents selected from the group consisting of a hydroxyl group and an amino group. A total number of carbon atoms of R¹¹, R¹² and R¹³ is 1 or more and 20 or less. The wavy line represents a bonding site.)

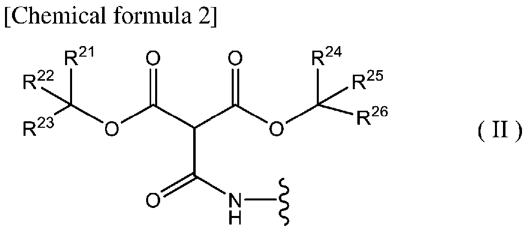

(In general formula (11), R²¹, R²², R²¹, R²⁴, R²⁵ and R²⁶ are each independently a hydrogen atom, or an alkyl group optionally containing one more substituents selected from the group consisting of a hydroxyl group and an amino group. The wavy line represents a bonding site.)

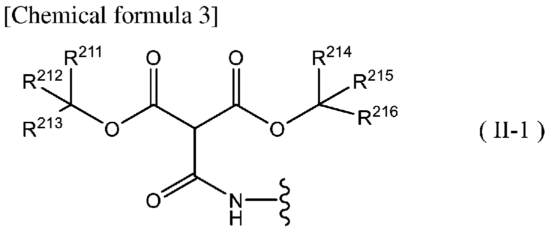

(In general formula (II-1), R²¹¹, R²¹² and R²¹³ are each independently an alkyl group optionally containing one or more substituents selected from the group consisting of a hydroxyl group and an amino group. A total number of carbon atoms of R²¹¹, R²¹² and R²¹³ is 3 or more and 20 or less. R²¹⁴, R²¹⁵ and R²¹⁶ are each independently a hydrogen atom, or an alkyl group optionally containing one or more substituents selected from the group consisting of a hydroxyl group and an amino group. The wavy line represents a bonding site.)
(9) The blocked polyisocyanate composition according to (8), wherein one of R²⁴, R²⁵ and R²⁶ in general formula (II) is a hydrogen atom.
(10) The blocked polyisocyanate composition according to (8) or (9), wherein in the general formula (11-1), a total number of carbon atoms of R²¹¹, R²¹² and R²¹³ is 4 or more and 20 or less.
(11) The blocked polyisocyanate composition according to any one of (1) to (10), wherein the blocked isocyanate group structure (X) of blocked polyisocyanate component (A) is at least one structure selected from the group consisting of a structure represented by the following general formula (III) and a structure represented by the following general formula (IV).

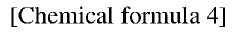

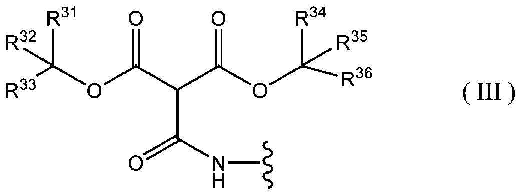

(In general formula (III), R³¹, R³², R³³, R³⁴, R³⁵ and R³⁶ are each independently a hydrogen atom, or an alkyl group optionally containing one or more substituents selected from the group consisting of a hydroxyl group and an amino group. At least one of R³¹, R³² and R³³ is a hydrogen atom, and at least one of R³⁴, R³⁵ and R³⁶ is a hydrogen atom. The wavy line represents a bonding site with a residue of polyisocyanate with an isocyanate group removed.)

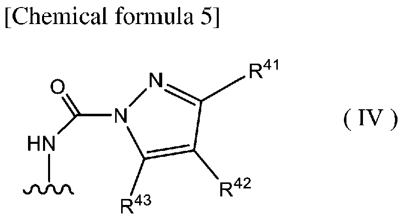

(In general formula (IV), R⁴¹, R⁴² and R⁴³ are each independently a hydrogen atom or an alkyl optionally containing one or more substituents selected from the group consisting of a hydroxyl group and an amino group. The wavy line represents a bonding site with a residue of polyisocyanate with an isocyanate group removed.)
(12) The blocked polyisocyanate composition according to any one of (1) to (11), wherein blocked polyisocyanate component (A) and blocked polyisocyanate component (B) are each derived from a polyisocyanate and a blocking agent, and
the polyisocyanate is a polyisocyanate derived from one or more diisocyanates selected from the group consisting of an aliphatic diisocyanate and an alicyclic diisocyanate.
(13) The blocked polyisocyanate composition according to (12), wherein the polyisocyanate has an average number of isocyanate groups of 3.5 or more.
(14) The blocked polyisocyanate composition according to any one of (1) to (3), wherein the blocked isocyanate group structure (X) of blocked polyisocyanate component (A) is the same as the blocked isocyanate group structure (Y) of blocked polyisocyanate component (B).
(15) A resin composition comprising the blocked polyisocyanate composition according to any one of (1) to (14) and a polyhydric hydroxy compound.
(16) A resin film obtained by curing the resin composition according to (15).
(17) A laminate obtained by laminating one or more layers of the resin film according to (16) on a substrate, wherein the resin film has a thickness of 1 µm or more and 50 µm or less per layer.

### [Advantageous Effects of Invention]

According to the above-described aspect, it is possible to provide a blocked polyisocyanate composition having good dispersibility in water-based resin compositions, excellent curability and curability maintenance (gel fraction retention rate) when baked at a low temperature of 90°C or lower immediately after being made into a water-based resin composition and after storage, ability to suppress gas generation when stored as a water-based resin composition, and excellent water resistance when formed into a resin film. The resin composition of the above aspect contains the blocked polyisocyanate composition, and has excellent curability when baked at a low temperature of 90°C or lower immediately after production and after storage, ability to suppress gas generation when stored, and excellent water resistance when formed into a resin film. The resin film and the laminate of the above aspect are obtained by curing the resin composition, and have excellent water resistance.

### [Description of Embodiments]

Hereinafter, the embodiments for implementing the present invention (hereinafter, "the present embodiment") are described in detail. In addition, the present invention is not limited to the following embodiments. The present invention can be implemented with appropriate changes within the scope of the present invention.

As used herein, the term "polyol" refers to a compound having two or more hydroxyl groups (-OH).

As used herein, the term "polyisocyanate" refers to a reaction product in which a plurality of monomeric compounds having one or more isocyanate groups (-NCO) are bonded.

As used herein, the term "structural unit" refers to a structure resulting from one molecule of a monomer in a structure constituting a polyisocyanate or a blocked polyisocyanate. For example, a structural unit derived from a malonic acid ester indicates a structure resulting from one molecule of the malonic acid ester in a blocked polyisocyanate. The structural unit may be a unit directly formed by a (co)polymerization reaction of monomers, or may be a unit in which a part of the unit is converted to another structure by treating a (co)polymer.

### «Blocked polyisocyanate composition»

The blocked polyisocyanate composition of the present embodiment comprises blocked polyisocyanate component (A) (hereinafter sometimes simply referred to as "component (A)") and blocked polyisocyanate component (B) (hereinafter sometimes simply referred to as "component (B)").

The nonionic hydrophilic group content of the blocked polyisocyanate composition of the present embodiment is 0.1% by mass or more and 25.0% by mass or less, preferably 1.0% by mass or more and 20.0% by mass or less, more preferably 3.0% by mass or more and 15.0% by mass or less, and even more preferably 5.0% by mass or more and 12.0% by mass or less, with respect to the total mass of solid contents in the blocked polyisocyanate composition. When the nonionic hydrophilic group content of the blocked polyisocyanate composition is within the above range, the dispersibility of the blocked polyisocyanate composition, the gas generation amount when stored as a water-based coating composition, and the low-temperature curability after storage tend to be improved.

The nonionic hydrophilic group content of the blocked polyisocyanate composition of the present embodiment can be calculated, for example, from the nonionic hydrophilic group content in component (A) and component (B), and the mixing ratio of component (A) and component (B).

When the nonionic hydrophilic group content of component (A) is represented by (a) mass% and the nonionic hydrophilic group content of component (B) is represented by (b) mass%, (a) and (b) satisfy a relationship of 0 < (b) < (a). That is, it can be said that the content of nonionic hydrophilic groups in component (A) is greater than the content of nonionic hydrophilic groups in component (B), and also greater than 0.

From the viewpoint of water dispersion stability of the blocked polyisocyanate composition, the lower limit of the nonionic hydrophilic group content of component (A) is preferably 1.0% by mass, more preferably 4.0% by mass, even more preferably 8.0% by mass, and particularly preferably 12.0% by mass, with respect to the mass of solid content of component (A).

On the other hand, from the viewpoint of water resistance of the resulting resin film, the upper limit of the nonionic hydrophilic group content of component (A) is preferably 55.0% by mass, more preferably 50.0% by mass, even more preferably 48.0% by mass, particularly preferably 44.0% by mass, with respect to the mass of solid content of component (A).

That is, the nonionic hydrophilic group content of component (A) is preferably 1.0% by mass or more and 55.0% by mass or less, more preferably 4.0% by mass% or more and 50.0 mass% or less, even more preferably 8.0 mass% or more and 48.0 mass% or less, and particularly preferably 12.0 mass% or more and 44.0 mass% or less, with respect to the mass of solid content of component (A).

When the nonionic hydrophilic group content of component (A) is within the above range, the water dispersibility of the resulting blocked polyisocyanate composition can be improved, and a uniform film tends to be obtained.

Alternatively, from the viewpoint of suppressing the decrease in water resistance, the nonionic hydrophilic group content of component (A) is preferably 1.0% by mass or more and 10.0% by mass or less, more preferably 1.0% by mass or more and 9.0% by mass or less.

From the viewpoint of suppressing the decrease in hardness and strength of the resulting resin film, the content of nonionic hydrophilic groups added to the blocked polyisocyanate contained in component (A), expressed in molar ratio, is preferably 2 mol% or more and 50 mol% or less, more preferably 4 mol% or more and 45 mol% or less, even more preferably 6 mol% or more and 40 mol% or less, still even more preferably 8 mol% or more and 35 mol% or less, and most preferably 10 mol% or more and 30 mol% or less, with respect to 100 mol% of the isocyanate groups of the raw material polyisocyanate.

Alternatively, from the viewpoint of suppressing the decrease in water resistance, the content of nonionic hydrophilic groups added to the blocked polyisocyanate contained in component (A), expressed in molar ratio, is preferably 2 mol% or more and 10 mol% or less, and more preferably 4 mol% or more and 8 mol% or less, with respect to 100 mol% of the isocyanate groups of the raw material polyisocyanate.

Although the lower limit of the nonionic hydrophilic group content of component (B) is not particularly limited, from the viewpoint of water dispersion stability of the blocked polyisocyanate composition, the lower limit is preferably 0.0% by mass, more preferably 0.1% by mass, even more preferably 1.0% by mass, and particularly preferably 2.0% by mass, with respect to the mass of solid content of component (B).

On the other hand, from the viewpoint of the water resistance of the resulting resin film, the upper limit of the nonionic hydrophilic group content of component (B) is preferably 20.0% by mass, more preferably 15.0% by mass, even more preferably 10.0% by mass, and particularly preferably 5.0% by mass, with respect to the mass of solid content of component (B).

That is, the nonionic hydrophilic group content of component (B) is preferably 0.0% by mass or more and 20.0% by mass or less, more preferably 0.1% by mass or more and 15.0% by mass or less, even more preferably 1.0% by mass or more and 10.0% by mass or less, and particularly preferably 2.0% by mass or more and 5.0% by mass or less, with respect to the mass of solid content of component (B).

When the nonionic hydrophilic group content of component (B) is within the above range, the resulting blocked polyisocyanate composition tends to have improved water dispersibility and improved storage stability.

From the viewpoint of suppressing the decrease in hardness and strength of the resulting resin film, the content of nonionic hydrophilic groups added to the blocked polyisocyanate, expressed in molar ratio, is preferably 0.00 mol% or more and 20.00 mol% or less, more preferably 0.25 mol% or more and 15.00 mol% or less, even more preferably 0.50 mol% or more and 10.00 mol% or less, still even more preferably 0.75 mol% or more and 5.00 mol% or less, and most preferably 1.00 mol% or more and 3.00 mol% or less, with respect to 100 mol% of the isocyanate groups of the raw material polyisocyanate.

The nonionic hydrophilic group content of component (A) and component (B) can be obtained, for example, by calculating the mass ratio of the nonionic hydrophilic compound to the total mass of solid content of each component as a percentage (% by mass), assuming that all of the nonionic hydrophilic compounds used have reacted with the isocyanate groups of the polyisocyanate.

The nonionic hydrophilic group content of component (A) and component (B) can be determined, for example, by extracting and separating component (A) and component (B) in the blocked polyisocyanate composition with a polar solvent or the like, and performing NMR measurement on the separated components.

A structure (X) of the blocked isocyanate group of component (A) (hereinafter sometimes simply referred to as "blocked isocyanate structure (X)") may be the same as or different from a structure (Y) of the blocked isocyanate group of component (B) (hereinafter sometimes simply referred to as "blocked isocyanate structure (Y)").

When each of the curing temperatures at which each of the resin films using component (A) and component (B) achieves a gel fraction of 80% by mass or more is represented by (A_{T1}) and (B_{T1}), (A_{T1}) and (Bn) satisfy a relationship of (A_{T1}) > (B_{T1}). The gel fraction is expressed as a percentage of a value obtained by dividing a mass of an undissolved portion of a resin film when the resin film is immersed in acetone at 23°C for 24 hours by a mass of the resin film before immersion. The resin film is obtained by a method in which each of component (A) and component (B) is blended with an acrylic polyol having a hydroxyl group content of 4.5% by mass at an NCO/OH ratio of 1.0 and adjusted to have a solid content of 50% by mass using butyl acetate, the NCO/OH ratio being a ratio of a molar amount of isocyanate groups of component (A) or component (B) to a molar amount of hydroxyl groups of the acrylic polyol, followed by applying each of the adjusted resulting solutions to a polypropylene plate so that the dried film thickness is 40 µm and heating at a temperature of 80°C or higher at an interval of 5°C for 30 minutes to dry. That is, the curing temperature (A_{T1}) at which the gel fraction in the resin film using component (A) achieves 80% by mass or more is higher than the curing temperature (B_{T1}) at which the gel fraction in the resin film using component (B) achieves 80% by mass or more. This is presumed to be due to the fact that the blocked isocyanate structure (X) of component (A) and the blocked isocyanate structure (Y) of component (B) are different from each other, and the moiety derived from the blocking agent in the blocked isocyanate structure (Y) of component (B) is easier to dissociate at a lower temperature than in the blocked isocyanate structure (X) of component (A).

The curing temperature (A_{T1}) is not particularly limited as long as it is higher than the curing temperature (Bn), and may be, for example, 85°C or higher, or 90°C or higher. On the other hand, although the upper limit of the curing temperature (A_{T1}) is not particularly limited, from the viewpoint of low-temperature curability of the resulting blocked polyisocyanate composition, it may be, for example, 150°C or lower, 140°C or lower, or 130°C or lower.

Although the curing temperature (B_{T1}) is not particularly limited as long as it is lower than the curing temperature (A_{T1}), it is preferably 100°C or lower, more preferably 95°C or lower, even more preferably 90°C or lower, particularly preferably 85°C or lower, and most preferably 80°C or lower. On the other hand, although the lower limit of the curing temperature (B_{T1}) is not particularly limited, from the viewpoint of storage stability of the resulting blocked polyisocyanate composition, it may be, for example, 70°C or higher, 75°C or higher, or 80°C or higher.

When each of curing temperatures at which each of resin films using component (A) and component (B) achieves a gel fraction of 80% by mass or more is represented by (A_{T2}) and (B_{T2}), (A_{T2}) and (B_{T2}) satisfy a relationship of (A_{T2}) > (B_{T2}). The gel fraction is expressed as a percentage of a value obtained by dividing a mass of an undissolved portion of a resin film when the resin film is immersed in acetone at 23°C for 24 hours by a mass of the resin film before immersion. The resin film is obtained by a method in which each of component (A) and component (B) is blended with a polycaprolactone triol having a number-average molecular weight of 850 (for example, Plaxel 308, manufactured by Daicel Corporation) at an NCO/OH ratio of 1.0 and adjusted to have a total amount of polycaprolactone triol and blocked polyisocyanate component of 50% by mass in the entire adjusted solution, the NCO/OH ratio being a ratio of a molar amount of isocyanate groups of component (A) or (B) to a molar amount of hydroxyl groups of the polycaprolactone triol, followed by adding about 2 ml of each of the adjusted resulting solutions onto an aluminum cup and heating at a temperature of 80°C or higher at an interval of 5°C for 30 minutes to dry. That is, the curing temperature (A_{T2}) at which the gel fraction in the resin film using component (A) achieves 80% by mass or more is higher than the curing temperature (B_{T2}) at which the gel fraction in the resin film using component (B) achieves 80% by mass or more. This is presumed to be due to the fact that the blocked isocyanate structure (X) of component (A) and the blocked isocyanate structure (Y) of component (B) are different from each other, and the moiety derived from the blocking agent in the blocked isocyanate structure (Y) of component (B) is easier to dissociate at a lower temperature than in the blocked isocyanate structure (X) of component (A).

The curing temperature (A_{T2}) is not particularly limited as long as it is higher than the curing temperature (B_{T2}), and may be, for example, 85°C or higher, or 90°C or higher. On the other hand, although the upper limit of the curing temperature (A_{T2}) is not particularly limited, from the viewpoint of low-temperature curability of the resulting blocked polyisocyanate composition, it may be, for example, 150°C or lower, 140°C or lower, or 130°C or lower.

Although the curing temperature (B_{T2}) is not particularly limited as long as it is lower than the curing temperature (A_{T2}), it is preferably 100°C or lower, more preferably 95°C or lower, even more preferably 90°C or lower, particularly preferably 85°C or lower, and most preferably 80°C or lower. On the other hand, although the lower limit of the curing temperature (B_{T2}) is not particularly limited, from the viewpoint of storage stability of the resulting blocked polyisocyanate composition, it may be, for example, 70°C or higher, 75°C or higher, or 80°C or higher.

If the structure (X) of the blocked isocyanate groups of component (A) is the same as the structure (Y) of the blocked isocyanate groups of component (B), then (A_{T1})= (B_{T1}), or (A_{T2})=(B_{T2}).

The mixing ratio of component (A) and component (B) can be represented by the mass ratio (A)/(B) of component (A) to component (B), and is preferably 1/99 or more and 99/1 or less, more preferably 5/95 or more and 95/5 or less, even more preferably 10/90 or more and 90/10 or less, and particularly preferably 20/80 or more and 80/20 or less. When the mass ratio (A)/(B) is within the above range, it is possible to achieve low-temperature curability immediately after production and after storage when made into a water-based coating composition, and also to suppress the amount of gas generated during storage.

The mixing ratio of component (A) and component (B) in the blocked polyisocyanate composition can be determined by, for example, extracting and separating component (A) and component (B) in the blocked polyisocyanate composition with a polar solvent or the like, and performing NMR measurement on the separated components.

Each component contained in the blocked polyisocyanate composition of the present embodiment will be described in detail below.

### <Blocked polyisocyanate component>

The blocked polyisocyanate composition of the present embodiment preferably contains component (A) and component (B) different from each other as blocked polyisocyanate components.

Component (A) is derived from a polyisocyanate, a nonionic hydrophilic compound and one or more blocking agents. That is, it is a reaction product of a polyisocyanate, a nonionic hydrophilic compound, and one or more blocking agents.

Component (A) contains a blocked isocyanate having a blocked isocyanate structure (X). The blocked isocyanate structure (X) is a structure formed by blocking the isocyanate groups of polyisocyanate with a blocking agent.

Component (B) is derived from a polyisocyanate and one or more blocking agents. That is, it is a reaction product of a polyisocyanate and one or more blocking agents.

Component (B) contains a blocked isocyanate having a blocked isocyanate structure (Y). The blocked isocyanate structure (Y) is a structure formed by blocking the isocyanate groups of polyisocyanate with a blocking agent.

The blocked polyisocyanate structure (X) of component (A) and the blocked polyisocyanate structure (Y) of component (B) can be obtained, for example, by dissolving component (A) and component (B) in a blocked polyisocyanate composition with a polar solvent or the like. The block polyisocyanate structure of each component can be identified by extracting, separating, and subjecting the separated component to NMR measurement.

The blocked polyisocyanate contained in component (B) may have a nonionic hydrophilic group. In this case, component (B) is derived from a polyisocyanate, a nonionic hydrophilic compound, and one or more blocking agents.

In component (A) and component (B), the nonionic hydrophilic compounds used for component (A) and component (B) may be the same or different within the range that satisfies the condition that the content of nonionic hydrophilic groups is higher in component (A) than in component (B).

Similarly, the polyisocyanates used for component (A) and component (B) may be the same or different.

### [Blocked isocyanate structure (X)]

The blocked isocyanate structure (X) is a structural unit formed by reacting an isocyanate group of polyisocyanate with a blocking agent.

Among them, the blocked isocyanate structure (X) is preferably a structural unit obtained by reacting an isocyanate group of a polyisocyanate with a pyrazole-based compound or a malonic acid ester-based compound, and more preferably a structural unit obtained by reacting an isocyanate group of an isocyanate with a malonic acid ester compound from the viewpoint of storage stability and low-temperature curability

### [Structure (III)]

Examples of the structural unit formed by reacting an isocyanate group of a polyisocyanate and a malonic acid ester compound include a structure represented by the following general formula (III) (hereinafter, sometimes referred to as "structure (III)") and the like.

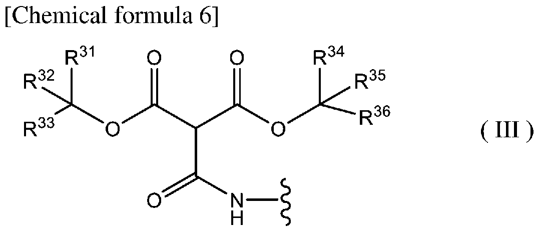

(In general formula (III), R³¹, R³², R³³, R³⁴, R³⁵ and R³⁶ are each independently a hydrogen atom, or an alkyl group optionally containing one or more substituents selected from the group consisting of a hydroxyl group and an amino group. At least one of R³¹, R³² and R³³ is a hydrogen atom, and at least one of R³⁴, R³⁵ and R³⁶ is a hydrogen atom. The wavy line represents the bonding site with a residue of polyisocyanate with an isocyanate group removed.)

The alkyl group for R³¹, R³², R³³, R³⁴, R³⁵ and R³⁶ preferably has 1 or more and 20 or less carbon atoms, more preferably has 1 or more and 8 or less carbon atoms, even more preferably has 1 or more and 6 or less carbon atoms, and particularly preferably has 1 or more and 4 or less carbon atoms.

Specific examples of the alkyl group having no substituents include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group, a decyl group and the like.

When R³¹, R³², R³³, R³⁴, R³⁵ and R³⁶ are substituted alkyl groups, the substituent is a hydroxyl group or an amino group.

Examples of the alkyl group containing a hydroxyl group as a substituent include a hydroxymethyl group, a hydroxyethyl group, a hydroxypropyl group and the like.

Examples of the alkyl group containing an amino group as a substituent include an aminomethyl group, an aminoethyl group, an aminopropyl group, an aminobutyl group and the like.

Examples of the alkyl group containing a hydroxyl group and an amino group as substituents include a hydroxyaminomethyl group, a hydroxyaminoethyl group, a hydroxyaminopropyl group and the like.

Among them, from the viewpoint of further improving storage stability and low-temperature curability of the water-based resin composition, it is preferable that R³³ and R³⁶ be hydrogen atoms, and R³¹, R³², R³⁴ and R³⁵ be each independently an unsubstituted alkyl group having 1 or more and 4 or less carbon atoms, and more preferable that R³³ and R³⁶ be hydrogen atoms, and R³¹, R³², R³⁴ and R³⁵ be each independently a methyl group or an ethyl group.

### [Structure (IV)]

Examples of the structural unit formed by reacting an isocyanate group of a polyisocyanate with a pyrazole compound include a structure represented by the following general formula (IV) (hereinafter sometimes referred to as "structure (IV)") and the like.

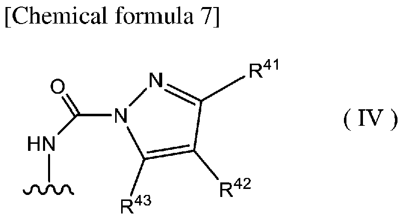

(In general formula (IV), R⁴¹, R⁴² and R⁴³ are each independently a hydrogen atom, or an alkyl optionally containing one or more substituents selected from the group consisting of a hydroxyl group and an amino group. The wavy line represents the bonding site with a residue of polyisocyanate with an isocyanate group removed.)

R⁴¹, R⁴² and R⁴³ preferably have 1 or more and 20 or less carbon atoms, more preferably have 1 or more and 8 or less carbon atoms, even more preferably have 1 or more and 6 or less carbon atoms, and particularly preferably have 1 or more and 4 or less carbon atoms.

Specific examples of the unsubstituted alkyl group and the substituted alkyl group for R⁴¹, R⁴² and R⁴³ include those exemplified in the structure (III) above.

Among them, from the viewpoint of compatibility of the blocked polyisocyanate composition, it is preferable that one or more of R⁴¹, R⁴² and R⁴³ be an alkyl group, and from the viewpoint of industrial availability, it is more preferable that R⁴² be a hydrogen atom, and R⁴¹ and R⁴³ be methyl groups.

### [Blocked isocyanate structure (Y)]

The blocked isocyanate structure (Y) is a structural unit formed by reacting an isocyanate group of polyisocyanate with a blocking agent.

Among them, from the viewpoint of storage stability and low-temperature curability, the blocked isocyanate structure (Y) is preferably a structural unit obtained by reacting an isocyanate group of a polyisocyanate with an imidazole-based compound or a malonic acid ester-based compound, and more preferably a structural unit obtained by reacting an isocyanate group of an isocyanate with a malonic acid ester compound.

### [Structure (1)]

Examples of the structural unit formed by reacting an isocyanate group of a polyisocyanate with an imidazole-based compound include a structure represented by the following general formula (I) (hereinafter sometimes referred to as "structure (I)") and the like.

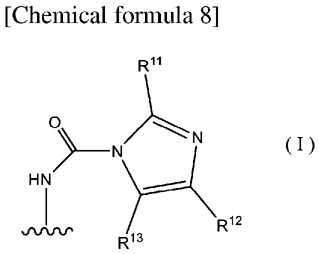

(In general formula (I), R¹¹, R¹² and R¹³ are each independently a hydrogen atom, or an alkyl optionally containing one or more substituents selected from the group consisting of a hydroxyl group and an amino group. The total number of carbon atoms of R¹¹, R¹² and R¹³ is 1 or more and 20 or less. The wavy line represents the bonding site with a residue of polyisocyanate with an isocyanate group removed.)

From the viewpoint of compatibility, the alkyl group for R¹¹, R¹² and R¹³ preferably has 1 or more and 20 or less carbon atoms, more preferably has 1 or more and 8 or less carbon atoms, and even more preferably has 1 or more and 6 or less carbon atoms, and particularly preferably has 1 or more and 4 or less carbon atoms.

Specific examples of the unsubstituted alkyl group and the substituted alkyl group for R¹¹, R¹² and R¹³ include those exemplified in the structure (III) above.

Among them, from the viewpoint of compatibility of the blocked polyisocyanate composition, it is preferable that one or more of R¹¹, R¹² and R¹³ be an alkyl group, and from the viewpoint of low-temperature curability, it is preferable that only R¹¹ be an alkyl group. Furthermore, from the viewpoint of industrial availability, it is more preferable that R¹² and R¹³ be a hydrogen atom and R¹¹ be a methyl group or an ethyl group.

### [Structure (II)]

Examples of the structural unit formed by reacting an isocyanate group of a polyisocyanate with a malonic acid ester compound include a structure represented by the following general formula (II) (hereinafter, sometimes referred to as "structure (II)") and the like.

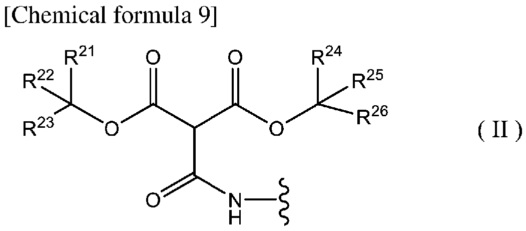

(In general formula (11), R²¹, R²², R²³, R²⁴, R²⁵ and R²⁶ are each independently a hydrogen atom, or an alkyl group optionally containing one or more substituents selected from the group consisting of a hydroxyl group and an amino group. The wavy line represents the bonding site.)

Examples of the unsubstituted alkyl group and the substituted group for R²¹, R²², R²³, R²⁴, R²⁵ and R²⁶ include those exemplified in the structure (III) above.

Among them, the alkyl group for R²¹, R²², R²³, R²⁴, R²⁵ and R²⁶ is preferably an unsubstituted alkyl group having 1 or more and 4 or less carbon atoms. In addition, it is preferable that at least one of R²⁴, R²⁵ and R²⁶ be a hydrogen atom, and more preferable that only one of them be a hydrogen atom.

When the structure (Y) is the structure (II), the content of the structure represented by the following general formula (II-1) (hereinafter, sometimes referred to as "structure (II-1)") is preferably 1 mol% or more, more preferably 5 mol% or more, even more preferably 20 mol% or more, still even more preferably 40 mol% or more, particularly preferably 50 mol% or more, and most preferably 80 mol% or more, with respect to 100 mol% of the structure (II). When the content of the structure (11-1) is at least the above lower limit, low-temperature curability when made into a water-based resin composition can be improved. On the other hand, the upper limit of the content of the structure (II-1) may be 100 mol% with respect to 100 mol% of structure (II), that is, all structure (II) can be made into structure (II-1), and may be 90 mol% with respect to 100 mol% of the structure (II), and may be 80 mol% with respect 100 mol% structure (II).

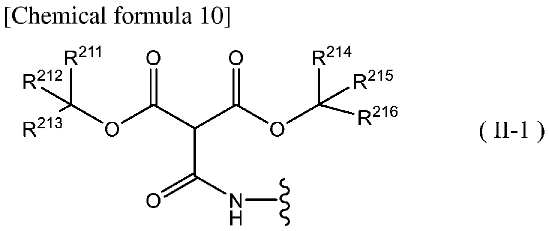

(In general formula (II-1), R²¹¹, R²¹² and R²¹³ are each independently an alkyl group optionally containing one or more substituents selected from the group consisting of a hydroxyl group and an amino group. The total number of carbon atoms of R²¹¹, R²¹² and R²¹³ is 3 or more and 20 or less. R²¹⁴, R²¹⁵ and R²¹⁶ are each independently a hydrogen atom, or an alkyl group optionally containing one or more substituents selected from the group consisting of a hydroxyl group and an amino group. The wavy line represents the bonding site.)

The total carbon number of R²¹¹, R²¹² and R²¹³ is 3 or more and 20 or less, preferably 4 or more and 20 or less, more preferably 4 or more and 12 or less, even more preferably 4 or more and 9 or less, and particularly preferably 4 or more and 6 or less.

When the total number of carbon atoms of R²¹¹, R²¹² and R²¹³ is at least the above lower limit, storage stability when made into a water-based resin composition can be exhibited. On the other hand, when the total number of carbon atoms of R²¹¹, R²¹² and R²¹³ is equal to or less than the above upper limit, low-temperature curability can be exhibited.

Examples of the unsubstituted alkyl group and the substituted alkyl group for R²¹¹, R²¹², R¹²³, R²¹⁴, R²¹⁵ and R²¹⁶ include those exemplified in the structure (111) above.

From the viewpoint of further improving storage stability and low-temperature curability of the water-based resin composition, R²¹¹, R²¹² and R²¹³ are preferably each independently an unsubstituted alkyl group having 1 or more and 4 or less carbon atoms, and more preferably a methyl group or an ethyl group.

In addition, the alkyl group for R²¹⁴, R²¹⁵ and R²¹⁶ is preferably an unsubstituted alkyl group having 1 or more and 4 or less carbon atoms. Furthermore, it is preferable that at least one of R²¹⁴, R²¹⁵ and R²¹⁶ be a hydrogen atom, and more preferable that only one of them be a hydrogen atom.

### [Polyisocyanate]

Polyisocyanate is a reaction product obtained by reacting a plurality of monomer compounds having one or more isocyanate groups (-NCO) (hereinafter sometimes referred to as "isocyanate monomer").

As the isocyanate monomer, those having 4 or more and 30 or less carbon atoms are preferable. Specific examples of the isocyanate monomer are shown below. These isocyanate monomers may be used alone or in combination of two or more.
(1) Aromatic diisocyanates such as diphenylmethane-4,4'-diisocyanate (MDI), 1,5-naphthalene diisocyanate, tolylene diisocyanate (TDI), xylylene diisocyanate, m-tetramethylxylylene diisocyanate (TMXDI) and the like.
(2) Aliphatic diisocyanates such as 1,4-tetramethylene diisocyanate, 1,6-hexamethylene diisocyanate (hereinafter sometimes referred to as "HDI"), 2,2,4-trimethyl-1,6-diisocyanatohexane, 2,4,4-trimethyl-1,6-hexamethylene diisocyanate, 2-methylpentane-1,5-diisocyanate (MPDI), lysine diisocyanate (hereinafter sometimes referred to as "LDI") and the like.
(3) Alicyclic diisocyanates such as isophorone diisocyanate (hereinafter sometimes referred to as "IPDI"), 1,3-bis(diisocyanatomethyl) cyclohexane, 4,4'-dicyclohexylmethane diisocyanate, diisocyanatonorbomane, di(isocyanatomethyl) norbornane and the like.
(4) Triisocyanates such as 4-isocyanatomethyl-1,8-octamethylene diisocyanate (hereinafter sometimes referred to as "NTI"), 1,3,6-hexamethylene triisocyanate (hereinafter sometimes referred to as "HT1"), bis(2-isocyanatoethyl) 2-isocyanatoglutarate (hereinafter sometimes referred to as "GTI"), lysine triisocyanate (hereinafter sometimes referred to as "LTI") and the like.

Among them, from the viewpoint of excellent weather resistance, the isocyanate monomer is preferably one or more diisocyanates selected from the group consisting of aliphatic diisocyanates and alicyclic diisocyanates. In addition, from the viewpoint of industrial availability, the isocyanate monomer is preferably HDI or IPDI. Moreover, from the viewpoint of making the blocked polyisocyanate component low in viscosity, the isocyanate monomer is preferably HDI.

Further, as the isocyanate monomer used for the production of the polyisocyanate, although either an aliphatic diisocyanate or an alicyclic diisocyanate may be used alone or in combination thereof, it is preferable that an aliphatic diisocyanate and an alicyclic diisocyanate be used in combination, and particularly preferable that HDI and IPDI be used in combination. By using an aliphatic diisocyanate and an alicyclic diisocyanate, toughness and hardness when formed into a coating film can be further improved.

In the polyisocyanate, from the viewpoint of improving coating film hardness and strength, the mass ratio of the structural unit derived from an aliphatic diisocyanate to the structural unit derived from an alicyclic diisocyanate (structural unit derived from an aliphatic diisocyanate / structural unit derived from an alicyclic diisocyanate) is preferably 50/50 or more and 95/5 or less, more preferably 55/45 or more and 93/7 or less, even more preferably 60/40 or more and 91/9 or less, and still even more preferably 65/35 or more and 90/10 or less.

When the mass ratio of the structural unit derived from an aliphatic diisocyanate to the structural unit derived from an alicyclic diisocyanate is at least the above lower limit, flexibility when formed into a coating film can be more effectively suppressed. On the other hand, when it is equal to or less than the above upper limit, the hardness when formed into a coating film can be further improved.

The mass ratio of the structural unit derived from an aliphatic diisocyanate to the structural unit derived from an alicyclic diisocyanate can be calculated, for example, using the following method. First, the mass of the unreacted aliphatic diisocyanate and the mass of the unreacted alicyclic diisocyanate are calculated from the mass of the unreacted diisocyanate after reaction and the aliphatic diisocyanate concentration and alicyclic diisocyanate concentration in the unreacted diisocyanate obtained by gas chromatography measurement, Then, the mass of the unreacted aliphatic diisocyanate and the mass of the unreacted alicyclic diisocyanate calculated above are each subtracted from the mass of charged aliphatic diisocyanate and the mass of charged alicyclic diisocyanate, and the resulting differences are each defined as the mass of the structural unit derived from an aliphatic diisocyanate and the mass of the structural unit derived from an alicyclic diisocyanate. Then, the mass ratio of the structural unit derived from an aliphatic diisocyanate to the structural unit derived from an alicyclic diisocyanate is obtained by dividing the mass of the structural unit derived from an aliphatic diisocyanate by the mass of the structural unit derived from an alicyclic diisocyanate.

### (Polyol)

The polyisocyanate is preferably derived from the diisocyanate monomer described above and a polyol having an average hydroxyl functional group number of 3.0 or more and 8.0 or less. Thereby, the average number of isocyanate groups of the resulting polyisocyanate can be increased. In the polyisocyanate, urethane groups are formed by the reaction between the hydroxyl groups of the polyol B and the isocyanate groups of the diisocyanate monomer.

The average hydroxyl functional group number of the polyol is preferably 3.0 or more and 8.0 or less, more preferably 3 or more and 6 or less, even more preferably 3 or more and 5 or less, and particularly preferably 3 or 4. In addition, the average hydroxyl functional group number of the polyol as used herein is the number of hydroxyl groups present in one polyol molecule.

From the viewpoint of improving coating film hardness and strength, the number-average molecular weight of the polyol is preferably 100 or more and 1,000 or less, more preferably 100 or more and 900 or less, even more preferably 100 or more and 600 or less, still even more preferably 100 or more and 570 or less, still even more preferably 100 or more and 500 or less, still even more preferably 100 or more and 400 or less, particularly preferably 100 or more and 350 or less, and most preferably 100 or more and 250 or less.

When the number-average molecular weight of the polyol is within the above range, the blocked polyisocyanate composition is excellent in low-temperature curability when formed into a coating film, and is particularly excellent in hardness and strength. The number-average molecular weight Mn of the polyol is, for example, a polystyrene-based number-average molecular weight measured by GPC.

Examples of such polyols include a trimethylolpropane, a glycerol, a polycaprolactone polyol derived from a tri- or higher polyhydric alcohol and ε-caprolactone, and the like.

Examples of the commercially available polycaprolactone polyols include "PLAXEL 303" (number-average molecular weight: 300), "PLAXEL 305" (number-average molecular weight: 550), "PLAXEL 308" (number-average molecular weight: 850), "PLAXEL 309" (number-average molecular weight 900) and the like, manufactured by Daicel.

### (Method for producing polyisocyanate)

The method for producing polyisocyanate will be described in detail below.

Polyisocyanate can be obtained, for example, by performing an allophanate-forming reaction to form allophanate groups, a uretdione-forming reaction to form uretdione groups, an iminooxadiazinedione-forming reaction to form iminooxadiazinedione groups, an isocyanurate-forming reaction to form isocyanurate groups, a urethane-forming reaction to form urethane groups and a biuret-forming reaction to form biuret groups at once in the presence of an excess of isocyanate monomer, and removing the unreacted isocyanate monomer after the reaction is completed. That is, the polyisocyanate obtained by the above reaction is one in which a plurality of the above-mentioned isocyanate monomers are bonded, and the reaction product has one or more groups selected from the group consisting of an allophanate group, a uretdione group, an iminooxadiazinedione group, an isocyanurate group, a urethane group and biuret group.

Alternatively, the above reactions may be carried out separately and the resulting polyisocyanates may be mixed in specific proportions.

From the viewpoint of ease of production, it is preferable to perform the above reactions at once to obtain the polyisocyanate, and from the viewpoint of freely adjusting the molar ratio of each functional group, it is preferable to produce them separately and then mix them.

### (1) Method for producing allophanate group-containing polyisocyanate

The allophanate group-containing polyisocyanate can be obtained by adding an alcohol to an isocyanate monomer and using an allophanate-forming reaction catalyst.

The alcohol used to form allophanate groups is preferably an alcohol formed only from carbon, hydrogen and oxygen.

Specific examples of the alcohol include, but are not limited to, monoalcohols, dialcohols, and the like. These alcohols may be used alone or in combination of two or more.

Examples of the monoalcohol include a methanol, ethanol, propanol, butanol, pentanol, hexanol, heptanol, octanol, nonanol and the like.

Examples of the dialcohol include an ethylene glycol, 1,3-butanediol, neopentyl glycol, 2-ethylhexanediol and the like.

Among them, the alcohol is preferably a monoalcohol, more preferably a monoalcohol having a molecular weight of 200 or less.

Examples of the allophanate-forming reaction catalyst include, but are not limited to, alkyl carboxylates of tin, lead, zinc, bismuth, zirconium, zirconyl and the like.

Examples of the alkyl carboxylates of tin (organic tin compound) include a tin 2-ethylhexanoate, dibutyltin dilaurate and the like.

Examples of the alkyl carboxylates of lead (organic lead compound) include a lead 2-ethylhexanoate and the like.

Examples of the zinc alkylcarboxylates (organic zinc compound) include a zinc 2-ethylhexanoate and the like.

Examples of the alkyl carboxylates of bismuth include a bismuth 2-ethylhexanoate and the like.

Examples of the alkyl carboxylates of zirconium include a zirconium 2-ethylhexanoate and the like.

Examples of the alkyl carboxylates of zirconyl include a zirconyl 2-ethylhexanoate and the like. These catalysts can be used alone or in combination of two or more.

In addition, the isocyanurate-forming reaction catalyst, which will be described later, can also be an allophanate-forming reaction catalyst. When the allophanate-forming reaction is performed using the isocyanurate reaction catalyst described later, an isocyanurate group-containing polyisocyanate (hereinafter sometimes referred to as "isocyanurate-type polyisocyanate") is naturally produced.

Among these, from the viewpoint of economic production, it is preferable to perform the allophanate-forming reaction and the isocyanurate-forming reaction using an isocyanurate-forming reaction catalyst described below as the allophanate-forming reaction catalyst.

The lower limit of the amount of the allophanate-forming reaction catalyst described above is preferably 10 mass ppm, more preferably 20 mass ppm, even more preferably 40 mass ppm, and particularly preferably 80 mass ppm, with respect to the mass of the charged isocyanate monomer.

The upper limit of the amount of the allophanate-forming reaction catalyst described above is preferably 1,000 mass ppm, more preferably 800 mass ppm, even more preferably 600 mass ppm, and particularly preferably 500 mass ppm, with respect to the mass of the charged isocyanate monomer.

That is, the amount of the allophanate reaction catalyst used is preferably 10 mass ppm or more and 1,000 mass ppm or less, and more preferably 20 mass ppm or more and 800 mass ppm or less, even more preferably 40 mass ppm or more and 600 mass ppm or less, and particularly preferably 80 mass ppm or more and 500 mass ppm or less, with respect to the mass of the charged isocyanate monomer.

The lower limit of the allophanate-forming reaction temperature is preferably 40°C, more preferably 60°C, even more preferably 80°C, and particularly preferably 100°C.

The upper limit of the allophanate-forming reaction temperature is preferably 180°C, more preferably 160°C, and even more preferably 140°C.

That is, the allophanate-forming reaction temperature is preferably 40°C or higher and 180°C or lower, more preferably 60°C or higher and 160°C or lower, even more preferably 80°C or higher and 140°C or lower, and particularly preferably 100°C or higher and 140°C or lower.

When the allophanate-forming reaction temperature is at least the above lower limit, it is possible to further improve the reaction rate. When the allophanate-forming reaction temperature is equal to or lower than the above upper limit, it tends to be possible to more effectively suppress the coloring of the polyisocyanate.

### (2) Method for producing uretdione group-containing polyisocyanate

When the polyisocyanate having uretdione groups is derived from an isocyanate monomer, it can be produced, for example, by polymerizing the isocyanate monomer using a uretdione-forming reaction catalyst or by heating.

The uretdione-forming reaction catalyst is not particularly limited, and examples thereof include tertiary phosphines such as a trialkylphosphine, a tris(dialkylamino)phosphine, a cycloalkylphosphine and the like, Lewis acids and the like, and the like.

Examples of the trialkylphosphine include a tri-n-butylphosphine, a tri-n-octylphosphine and the like.

Examples of the tris(dialkylamino)phosphine include a tris-(dimethylamino)phosphine and the like.

Examples of the cycloalkylphosphine includes a cyclohexyl-di-n-hexylphosphine and the like.

Examples of Lewis acid include a boron trifluoride, zinc oxychloride and the like.

Many of the uretdione-forming reaction catalysts can also promote the isocyanurate-forming reaction at the same time.

When using a uretdione-forming reaction catalyst, it is preferable to add a deactivator of the uretdione-forming reaction catalyst such as a phosphoric acid, a methyl p-toluenesulfonate or the like to stop the uretdione-forming reaction at the time the desired yield is achieved.

When producing a polyisocyanate having a uretdione group by heating one or more diisocyanates selected from the group consisting of aliphatic diisocyanates and alicyclic diisocyanates without using a uretdione-forming reaction catalyst, the heating temperature is preferably 120°C or higher, more preferably 150°C or higher and 170°C or lower. Moreover, the heating time is preferably 1 hour or more and 4 hours or less.

### (3) Method for producing iminooxadiazinedione group-containing polyisocyanate

When the iminooxadiazinedione group-containing polyisocyanate is derived from an isocyanate monomer, an iminooxadiazinedione-forming reaction catalyst is usually used.

Examples of the iminooxadiazinedione-forming catalyst include those shown in 1) or 2) below.
1) (Poly)hydrogen fluorides represented by the general formula M[Fn] or the general formula M[Fn(HF)m].
   (In the formula, m and n are integers satisfying the relationship of m/n > 0. M is an n-charged cation (mixture) or one or more radicals with a total of n valences.)
2) Compounds consisting of a compound represented by the general formula R1-CR'2-C(O)O- or the general formula R2=CR'-C(O)O- and a quaternary ammonium cation or a quaternary phosphonium cation.

(In the formula, R1 and R2 are each independently a linear, branched or cyclic saturated or unsaturated perfluoroalkyl group having 1 or more and 30 or less carbon atoms. The plurality of R's are each independently a hydrogen atom, or an alkyl group or an aryl group having 1 or more and 20 or less carbon atoms which optionally contain a heteroatom.)

Specific examples of 1), the compound ((poly)hydrogen fluoride, include a tetramethylammonium fluoride hydrate, a tetraethylammonium fluoride and the like.

Specific examples of the compound of 2) include a 3,3,3-trifluorocarboxylic acid, 4,4,4,3,3-pentafluorobutanoic acid, 5,5,5,4,4,3,3-heptafluoropentanoic acid, 3,3-difluoroprop-2-enoic acid and the like.

Among them, as the iminooxadiazinedione-forming reaction catalyst, 1) is preferable from the viewpoint of availability, and 2) is preferable from the viewpoint of safety.

The lower limit of the amount of the iminooxadiazinedione-forming catalyst to be used is not particularly limited, but from the viewpoint of reactivity, it is preferably 5 ppm, more preferably 10 ppm, and even more preferably 20 ppm, in mass ratio, with respect to the raw material isocyanate monomer such as HDI or the like.

The upper limit of the amount of the iminooxadiazinedione-forming catalyst to be used is preferably 5,000 ppm, more preferably 2,000 ppm, even more preferably 500 ppm, in mass ratio, with respect to the raw material isocyanate monomer such as HDI or the like from the viewpoint of suppressing coloring and discoloration of the product and

### controlling the reaction.

That is, the amount of the iminooxadiazinedione-forming catalyst to be used is preferably 5 ppm or more and 5,000 ppm or less, more preferably 10 ppm or more and 2,000 ppm or less, and even more preferably 20 ppm or more and 500 ppm or less, in mass ratio, with respect to the raw material isocyanate monomer such as HDI or the like.

Although the lower limit of the reaction temperature for iminooxadiazinedione formation is not particularly limited, it is preferably 40°C, more preferably 50°C, and even more preferably 60°C, from the viewpoint of reaction rate.

The upper limit of the reaction temperature for iminooxadiazinedione formation is preferably 150°C, more preferably 120°C, and even more preferably 110°C, from the viewpoint of suppressing coloring and discoloration of the product.

That is, the reaction temperature for iminooxadiazinedione formation is preferably 40°C or higher and 150°C or lower, more preferably 50°C or higher and 120°C or lower, even more preferably 60°C or higher and 110°C or lower.

Once the iminooxadiazinedione-forming reaction reaches the desired iminooxadiazinedione group content, the iminooxadiazinedione-forming reaction can be terminated. The iminooxadiazinedione-forming reaction can be terminated, for example, by adding an acidic compound to the reaction solution. Examples of the acidic compounds include a phosphoric acid, acidic phosphate ester, sulfuric acid, hydrochloric acid, sulfonic acid compound and the like. As a result, the iminooxadiazinedione-forming reaction catalyst is neutralized, or deactivated by thermal decomposition, chemical decomposition, or the like. After terminating the reaction, if necessary, filtration can be performed.

### (4) Method for producing isocyanurate group-containing polyisocyanate

Examples of the catalyst for deriving a polyisocyanate containing an isocyanurate group from an isocyanate monomer include commonly used isocyanurate-forming reaction catalysts.

Although the isocyanurate-forming reaction catalyst is not particularly limited, it is generally preferable to have basicity. Specific examples of the isocyanurate-forming reaction catalyst include those shown below.
1) Hydroxides of a tetraalkylammonium such as a tetramethylammonium, tetraethylammonium, tetrabutylammonium or the like, and organic weak acid salts such as an acetate, propionate, octylate, caprate, myristate, benzoate or the like of the tetraalkylammoniums.
2) Hydroxides of an aryltrialkylammonium such as a benzyltrimethylammonium, trimethylphenylammonium or the like, and organic weak acid salts such as an acetate, propionate, octylate, caprate, myristate, benzoate or the like of the aryltrialkylammoniums.
3) Hydroxides of a hydroxyalkylammonium such as a trimethylhydroxyethylammonium, trimethylhydroxypropylammonium, triethylhydroxyethylammonium, triethylhydroxypropylammonium or the like, and organic weak acid salts such as an acetate, propionate, octylate, caprate, myristate, benzoate or the like of the hydroxyalkylammoniums.
4) Metal salts such as tin, zinc, lead or the like of alkylcarboxylic acids such as an acetate, propionate, octylate, caprate, myristate or the like.
5) Alcoholates of metals such as a sodium, potassium or the like.
6) Aminosilyl group-containing compounds such as a hexamethylenedisilazane or the like.
7) Mannich bases.
8) Mixtures of a tertiary amine and an epoxy compound.
9) Phosphorus compounds such as a tributylphosphine.

Among them, from the viewpoint of less generation of unnecessary by-products, the isocyanurate-forming reaction catalyst is preferably a hydroxide of a quaternary ammonium or an organic weak acid salt of a quaternary ammonium, and more preferably a hydroxide of a tetraalkylammonium, a weak organic acid salt of a tetraalkylammonium, a hydroxide of an aryltrialkylammonium, or an organic weak acid salt of an aryltrialkylammonium.

The upper limit of the amount of the isocyanurate-forming reaction catalyst used is preferably 1,000 ppm by mass, more preferably 500 ppm by mass, and even more preferably 100 ppm by mass, with respect to the mass of charged isocyanate monomer.

On the other hand, the lower limit of the amount of the isocyanurate-forming reaction catalyst used is not particularly limited, but may be, for example, 10 mass ppm.

The isocyanurate-forming reaction temperature is preferably 50°C or higher and 120°C or lower, more preferably 60°C or higher and 90°C or lower. When the isocyanurate-forming reaction temperature is equal to or lower than the above upper limit, it tends to be possible to more effectively suppress the coloring of the polyisocyanate.

When the desired conversion rate (ratio of the mass of the polyisocyanate produced in the isocyanurate-forming reaction to the mass of the charged isocyanate monomer) is reached, the isocyanurate-forming reaction is terminated by adding an acidic compound (e.g., phosphoric acid, acidic phosphate ester, etc.).

In addition, in order to obtain a polyisocyanate, it is necessary to terminate the progress of the reaction at an early stage. However, since the initial reaction rate of the isocyanurate-forming reaction is very fast, it is difficult to stop the progress of the reaction at an early stage, and it is necessary to carefully select the reaction conditions, especially the addition amount and addition method of the catalyst. For example, a method of adding the catalyst in portions at regular intervals is recommended as a suitable method.

Therefore, the conversion rate of the isocyanurate-forming reaction for obtaining a polyisocyanate is preferably 10% or more and 60% or less, more preferably 15% or more and 55% or less, and even more preferably 20% or more and 50% or less.

When the conversion rate of the isocyanurate reaction is equal to or lower than the above upper limit, the viscosity of the block polyisocyanate component can be lowered. Furthermore, when the conversion rate of the isocyanurate reaction is equal to or higher than the above lower limit, the reaction termination operation can be performed more easily.

Moreover, when deriving a polyisocyanate containing an isocyanurate group, an alcohol having a valence of 1 or more and 6 or less can be used in addition to the above-described isocyanate monomers.

Examples of the alcohol having a valence of 1 or more and 6 or less that can be used include non-polymerizable alcohols and polymerizable alcohols. The term "non-polymerizable alcohol" as used herein refers to an alcohol that does not have a polymerizable group. On the other hand, the term "polymerizable alcohol" refers to an alcohol obtained by polymerizing a monomer having a polymerizable group and a hydroxyl group.

Examples of the non-polymerizable alcohol include polyhydric alcohols such as monoalcohols, diols, triols, tetraols or the like.

Examples of the monoalcohols include a methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol, ethylcyclohexanol and the like.

Examples of the diols include an ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethylpentanediol, 2-butyl-2-ethyl-1,3-propanediol, 2,2-diethyl-1,3-propanediol and the like.

Examples of the triols include a glycerin, trimethylolpropane and the like.

Examples of the tetraols include a pentaerythritol and the like.

Examples of the polymerizable alcohol include, but are not particularly limited to, a polyester polyols, polyether polyols, acrylic polyols, polyolefin polyols, and the like.

Examples of the polyester polyol include, but are not particularly limited to, a product obtained by a condensation reaction between a dibasic acid alone or in a mixture thereof and a polyhydric alcohol alone or in a mixture thereof.

Examples of the dibasic acids include, but are not particularly limited to, at least one dibasic acid selected from the group consisting of carboxylic acids such as a succinic acid, adipic acid, sebacic acid, dimer acid, maleic anhydride, phthalic anhydride, isophthalic acid, terephthalic acid or the like.

Examples of the polyhydric alcohol include, but are not limited to, at least one polyhydric alcohol selected from the group consisting of ethylene glycol, propylene glycol, diethylene glycol, neopentyl glycol, trimethylolpropane, and glycerin.

Examples of the polyester polyols include polycaprolactones obtained by ring-opening polymerization of ε-caprolactone using the polyhydric alcohols described above.

Examples of the polyether polyols include, but are not particularly limited to, polyether polyols obtained by adding an alkylene oxide alone or in a mixture thereof to a polyhydric alcohol alone or in a mixture thereof using an alkali metal hydroxide or a strongly basic catalyst, polyether polyols obtained by reacting a polyamine compound with an alkylene oxide, and so-called polymer polyols obtained by polymerizing an acrylamide or the like using the above-described polyethers as a medium.

Examples of the alkali metal include a lithium, sodium, potassium and the like.

Examples of the strongly basic catalysts include alcoholates, alkylamines and the like.

Examples of the polyhydric alcohol include those exemplified in the above polyester polyols.

Examples of the alkylene oxide include an ethylene oxide, propylene oxide, butylene oxide, cyclohexene oxide, styrene oxide and the like.

Examples of the polyamine compound include ethylenediamines and the like.

Examples of the acrylic polyol include, but are not particularly limited to, those obtained by copolymerizing an ethylenically unsaturated bond-containing monomer having a hydroxyl group, alone or in a mixture thereof, with another ethylenically unsaturated bond-containing monomer copolymerizable therewith, alone or in a mixture therof.

Examples of the ethylenically unsaturated bond-containing monomer having a hydroxyl group include, but are not limited to, a hydroxyethyl acrylate, hydroxypropyl acrylate, hydroxybutyl acrylate, hydroxyethyl methacrylate, hydroxypropyl methacrylate, hydroxyl methacrylate butyl and the like.

Examples of the other ethylenically unsaturated bond-containing monomer copolymerizable with the ethylenically unsaturated bond-containing monomer having a hydroxyl group include, but are not particularly limited to, an acrylic acid ester, methacrylic acid ester, unsaturated carboxylic acid, unsaturated amide, vinyl monomer, vinyl monomer having a hydrolyzable silyl group and the like.

Examples of the acrylic ester include a methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, phenyl acrylate and the like.

Examples of the methacrylate include a methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, phenyl methacrylate and the like.

Examples of the unsaturated carboxylic acid include an acrylic acid, methacrylic acid, maleic acid and itaconic acid and the like.

Examples of the unsaturated amide include an acrylamide, methacrylamide, N,N-methylenebisacrylamide, diacetone acrylamide, diacetone methacrylamide, maleic acid amide, maleimide and the like.

Examples of the vinyl monomer include a glycidyl methacrylate, styrene, vinyl toluene, vinyl acetate, acrylonitrile, dibutyl fumarate and the like.

Examples of the vinyl monomer having a hydrolyzable silyl group include a vinyltrimethoxysilane, vinylmethyldimethoxysilane, γ-(meth)acryloxypropyltrimethoxysilane and the like.

Examples of the polyolefin polyol include a hydroxyl-terminated polybutadiene and hydrogenated products thereof.

### (5) Method for producing urethane group-containing polyisocyanate

When deriving a polyisocyanate containing a urethane group from an isocyanate monomer, for example, it can be produced by mixing an excess of isocyanate monomer, the above-described polyol and optionally an alcohol other than the above-described polyol, and if necessary, adding a urethane-forming reaction catalyst.

Examples of the polyol include those exemplified in the above-described "polyol".

Examples of the alcohol other than the polyol include those exemplified in the above "Method for producing isocyanurate group-containing polyisocyanate" excluding those exemplified in the above-described "polyol".

Examples of the urethane-forming reaction catalyst include, but are not particularly limited to, tin-based compounds, zinc-based compounds, amine-based compounds and the like.

The urethane-forming reaction temperature is preferably 50°C or higher and 160°C or lower, more preferably 60°C or higher and 120°C or lower.

When the urethane-forming reaction temperature is equal to or lower than the above upper limit, it tends to be possible to more effectively suppress the coloring of the polyisocyanate.

The urethane-forming reaction time is preferably 30 minutes or more and 4 hours or less, more preferably 1 hour or more and 3 hours or less, and even more preferably 1 hour or more and 2 hours or less.

The ratio of the molar amount of isocyanate groups of the isocyanate monomer to the molar amount of hydroxyl groups of the polyol (and optionally alcohols other than the polyol) is preferably 211 or more and 50/1 or less. When the molar ratio is equal to or higher than the above lower limit, the viscosity of the polyisocyanate can be made lower. When the molar ratio is equal to or less than the above upper limit, the yield of the urethane group-containing polyisocyanate can be further increased.

### (6) Method for producing biuret group-containing polyisocyanate

Examples of the biuret-forming agent for deriving a polyisocyanate containing a biuret group from an isocyanate monomer include, but are not particularly limited to, water, monohydric tertiary alcohols, formic acid, organic primary monoamines, organic primary diamines, and the like.

The amount of isocyanate groups is preferably 6 mol or more, more preferably 10 mol or more, and even more preferably 10 mol or more and 80 mol or less, with respect to 1 mol of the biuret-forming agent. If the molar amount of isocyanate groups with respect to 1 mol of the biuret-forming agent is at least the above lower limit, the polyisocyanate can have a sufficiently low viscosity, and if it is equal to or lower than the above upper limit, the low-temperature curability of the resin film can be further improved.

A solvent may also be used during the biuret-forming reaction. Any solvent may be used as long as it dissolves the isocyanate monomer and the biuret-forming agent, such as water, and forms a homogeneous phase under the reaction conditions.

Specific examples of the solvent include ethylene glycol-based solvents, phosphoric acid-based solvents and the like.

Examples of the ethylene glycol-based solvent include an ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methyl ethyl ether, ethylene glycol methyl isopropyl ether, ethylene glycol methyl-n-butyl ether, ethylene glycol ethyl-n-propyl ether, ethylene glycol ethyl isopropyl ether, ethylene glycol ethyl-n-butyl ether, ethylene glycol-n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methyl ethyl ether, diethylene glycol methyl isopropyl ether, diethylene glycol methyl-n-propyl ether, diethylene glycol methyl-n-butyl ether, diethylene glycol ethyl isopropyl ether, diethylene glycol ethyl-n-propyl ether, diethylene glycol ethyl-n-butyl ether, diethylene glycol-n-propyl-n-butyl ether, diethylene glycol isopropyl-n-butyl ether, and the like.

Examples of the phosphoric acid-based solvents include a trimethyl phosphate, triethyl phosphate, tripropyl phosphate, tributyl phosphate and the like.

These solvents may be used alone or in combination of two or more.

Among them, ethylene glycol monomethyl ether acetate, ethylene glycol monoethyl ether acetate, ethylene glycol diacetate and diethylene glycol dimethyl ether are preferable as the ethylene glycol-based solvent.

Moreover, trimethyl phosphate or triethyl phosphate is preferable as the phosphoric acid-based solvent.

The biuret-forming reaction temperature is preferably 70°C or higher and 200°C or lower, more preferably 90°C or higher and 180°C or lower. When the temperature is equal to or less than the above upper limit, there is a tendency that the coloring of the polyisocyanate can be prevented more effectively.

The allophanate-forming reaction, uretodione-forming reaction, iminooxadiazinedione-forming reaction, isocyanurate-forming reaction, urethane-forming reaction, and biuret-forming reaction described above may be carried out sequentially, or some of them may be carried out in parallel.

After the reaction is completed, unreacted isocyanate monomers are removed from the reaction solution by thin film distillation, extraction or the like to obtain the polyisocyanate.

Moreover, an antioxidant or an ultraviolet absorber may be added to the obtained polyisocyanate, for example, for the purpose of suppressing coloration during storage.

Examples of the antioxidant include hindered phenols such as a 2,6-di-tert-butyl-p-cresol and the like. Examples of the ultraviolet absorber include a benzotriazole, benzophenone and the like. These antioxidants and UV absorbers may be used alone or in combination of two or more. The addition amount is preferably 10 mass ppm or more and 500 mass ppm or less with respect to the mass of the polyisocyanate.

### (Average number of isocyanate groups of polyisocyanate)

The average number of isocyanate groups of the polyisocyanate is preferably 2 or more from the viewpoint of improving low-temperature curability when made into a resin film, and more preferably 3.0 or more and 20.0 or less, even more preferably 3.2 or more and 10.0 or less, particularly preferably 3.4 or more and 8.0 or less, and most preferably 3.5 or more and 6.0 or less from the viewpoint of achieving both low-temperature curability when formed into a resin film and compatibility with polyhydric hydroxy compounds.

The average number of isocyanate functional groups of the polyisocyanate can be measured using the method described in the Examples below.

### [Blocking agent]

Examples of the blocking agent include 1) alcohol compounds, 2) alkylphenol compounds, 3) phenol compounds, 4) active methylene compounds, 5) mercaptan compounds, 6) acid amide compounds, 7) acid imide compounds, 8) imidazole compounds, 9) urea compounds, 10) oxime compounds, 11) amine compounds, 12) imide compounds, 13) bisulfites, 14) pyrazole compounds, 15) triazole compounds, and the like. Specific examples of the blocking agent include those shown below.

1) Alcohol compounds: alcohols such as a methanol, ethanol, 2-propanol, n-butanol, sec-butanol, 2-ethyl-1-hexanol, 2-methoxyethanol, 2-ethoxyethanol, 2-butoxyethanol and the like.
2) Alkylphenol compounds: mono- and di-alkylphenols having alkyl groups having 4 or more carbon atoms as a substituent. Specific examples of the alkylphenol compound include monoalkylphenols such as an n-propylphenol, iso-propylphenol, n-butylphenol, sec-butylphenol, tert-butylphenol, n-hexylphenol, 2-ethylhexylphenol, n-octylphenol, n-nonylphenol or the like; and dialkylphenols such as a di-n-propylphenol, diisopropylphenol, isopropylcresol, di-n-butylphenol, di-tert-butylphenol, di-sec-butylphenol, di-n-octylphenol, di-2-ethylhexylphenol, di-n-nonylphenol and the like.
3) Phenol compounds: phenol, cresol, ethylphenol, styrenated phenol, hydroxybenzoic acid ester and the like.
4) Active methylene compounds: acetoacetate esters (methyl acetoacetate, ethyl acetoacetate, methyl isobutanoyl acetate, ethyl isobutanoyl acetate), acetylacetone, malonic acid ester compounds (dimethyl malonate, diethyl malonate, dipropyl malonate, dibutyl malonate, dicyclohexyl malonate, diphenyl malonate, di-sec-butyl malonate, diisopropyl malonate, isopropylethyl malonate, di-tert-butyl malonate, di(2-methyl-2-butyl) malonate, di(2-methyl-2-pentyl) malonate, (tert-butyl)ethyl malonate, (2-methyl-2-butyl)ethyl malonate, (2-methyl-2-butyl)isopropyl malonate, (2-methyl-2-pentyl)ethyl malonate, (2-methyl-2-pentyl)isopropyl malonate, (2-methyl-2-pentyl)hexylisopropyl malonate) and the like.
5) Mercaptan compounds: butyl mercaptan, dodecyl mercaptan and the like.
6) Acid amide compounds: acetanilide, acetic amide, ε-caprolactam, δ-valerolactam, γ-butyrolactam and the like.
7) Acid imide compounds: succinimide, maleic imide and the like.
8) Imidazole compounds: imidazole, 2-methylimidazole, 4-methylimidazole, 2-ethylimidazole, 2-isopropylimidazole, 2,4-dimethylimidazole, 2-ethyl-4-methylimidazole, 2-phenylimidazole, 4-methyl-2-phenylimidazole and the like.
9) Urea compounds: urea, thiourea, ethylene urea and the like.
10) Oxime compounds: formaldoxime, acetoaldoxime, acetoxime, methylethylketoxime, cyclohexanone oxime and the like.
11) Amine compounds: diphenylamine, aniline, carbazole, di-n-propylamine, diisopropylamine, isopropylethylamine and the like.
12) Imine compounds: ethyleneimine, polyethyleneimine and the like;
13) Bisulfite compounds: sodium bisulfite and the like.
14) Pyrazole compounds: pyrazole, 3-methylpyrazole, 3,5-dimethylpyrazole and the like.
15) Triazole compounds: 3,5-dimethyl-1,2,4-triazole and the like.

### [Nonionic hydrophilic compound]

Specific examples of the nonionic hydrophilic compound include monoalcohols and compounds obtained by adding ethylene oxide added to the hydroxyl group of alcohol. Examples of the monoalcohols include a methanol, ethanol, butanol, and the like. The nonionic hydrophilic compound may be used alone or in combination of two or more.

In addition to the ethylene oxide, an alkylene oxide having 3 or more carbon atoms may be added to the hydroxyl group of alcohol. Among them, those to which an ethylene oxide and a propylene oxide are added are preferable, and those to which only an ethylene oxide is added are more preferable.

Examples of the compound obtained by adding ethylene oxide to the hydroxyl group of alcohol include an ethylene glycol, diethylene glycol, polyethylene glycol and the like. These nonionic hydrophilic compounds also have active hydrogen groups that react with isocyanate groups.

Among them, from the viewpoint of improving water dispersibility of the block polyisocyanate composition using only a small amount, the nonionic hydrophilic compound is preferably a polyethylene glycol monoalkyl ether obtained by adding ethylene oxide to the hydroxyl group of a monoalcohol.

The number of ethylene oxide additions in the compound to which ethylene oxide is added is preferably 4 or more and 30 or less, more preferably 4 or more and 25 or less. When the number of ethylene oxide additions is at least the above lower limit, the blocked polyisocyanate composition tends to be more effectively imparted with water dispersibility, and when the number of ethylene oxide additions is equal to or less than the above upper limit, there is a tendency that deposits of the blocked polyisocyanate composition are less likely to occur during low-temperature storage.

### [Other hydrophilic compounds]

At least some of the blocked polyisocyanate may further have a structural unit derived from a hydrophilic compound other than the nonionic hydrophilic compound, that is, a hydrophilic group other than the nonionic hydrophilic group.

Said other hydrophilic compounds are compounds having hydrophilic groups other than nonionic hydrophilic groups. Said other hydrophilic compounds, in addition to the hydrophilic groups other than nonionic hydrophilic groups, preferably have one or more active hydrogen groups for reacting with at least one of the isocyanate groups possessed by the polyisocyanate per molecule of said other hydrophilic compound. Specific examples of the active hydrogen group include a hydroxyl group, mercapto group, carboxylic acid group, amino groups and thiol group.

Examples of said other hydrophilic compounds include cationic hydrophilic compounds and anionic hydrophilic compounds. These hydrophilic compounds may be used alone or in combination of two or more. Among them, from the viewpoint of suppressing the decrease in hardness and strength of the resulting resin film and from the viewpoint of improving emulsifying property, said other hydrophilic compounds are preferably an anionic hydrophilic compound.

### (Cationic hydrophilic compound)

Specific examples of the cationic hydrophilic compounds include compounds having both a cationic hydrophilic group and an active hydrogen group. Further, a compound having an active hydrogen group such as a glycidyl group and a compound having a cationic hydrophilic group such as a sulfide or phosphine may be combined and used as a hydrophilic compound. In this case, a compound having an isocyanate group and a compound having an active hydrogen group are reacted in advance to add a functional group such as a glycidyl group, and then a compound such as a sulfide, phosphine or the like is reacted. From the viewpoint of ease of production, a compound having both a cationic hydrophilic group and an active hydrogen group is preferable.

Specific examples of the compound having both a cationic hydrophilic group and an active hydrogen group include a dimethylethanolamine, diethylethanolamine, diethanolamine, methyldiethanolamine and the like. Further, the tertiary amino group added using these compounds can also be quaternized with, for example, dimethyl sulfate and diethyl sulfate.

The cationic hydrophilic compound and the alicyclic polyisocyanate can be reacted in the presence of a solvent. The solvent in this case preferably does not contain an active hydrogen group, and specific examples thereof include an ethyl acetate, propylene glycol monomethyl ether acetate, dipropylene glycol dimethyl ether and the like.

The cationic hydrophilic groups added to the blocked polyisocyanate are preferably neutralized with a compound having an anionic group. Specific examples of the anionic group include a carboxyl group, sulfonic acid group, phosphoric acid group, halogen group, sulfuric acid group and the like.

Specific examples of the compound having carboxyl group include a formic acid, acetic acid, propionic acid, butyric acid, lactic acid and the like.

Specific examples of the compound having a sulfonic acid group include an ethanesulfonic acid and the like.

Specific examples of the compound having a phosphoric acid group include a phosphoric acid, acidic phosphoric acid ester and the like.

Specific examples of the compound having a halogen group include a hydrochloric acid and the like.

Specific examples of the compound having a sulfate group include a sulfuric acid and the like.

Among them, the compound having an anionic group is preferably a compound having a carboxyl group, and more preferably an acetic acid, propionic acid or butyric acid.

### (Anionic hydrophilic compound)

Specific examples of the anionic hydrophilic group include a carboxyl group, sulfonic acid group, phosphoric acid group, halogen group, sulfuric acid group and the like.

Specific examples of the anionic hydrophilic compound include compounds having both an anionic group and an active hydrogen group, and more specifically include compounds having a carboxyl group of monohydroxycarboxylic acid or polyhydroxycarboxylic acid as an anionic group.

Examples of the monohydroxycarboxylic acid include a 1-hydroxyacetic acid, 3-hydroxypropanoic acid, 12-hydroxy-9-octadecanoic acid, hydroxypivalic acid (hydroxypivalic acid), lactic acid and the like.

Examples of the compound having a carboxyl group of polyhydroxycarboxylic acid as an anionic group include a dimethylolacetic acid, 2,2-dimethylolbutyric acid, 2,2-dimethylolpentanoic acid, dihydroxysuccinic acid, dimethylolpropionic acid and the like.

Also, compounds having both a sulfonic acid group and an active hydrogen group may also be mentioned, and more specifically, for example, an isethionic acid may be mentioned.

Among them, a hydroxypivalic acid or dimethylolpropionic acid is preferable as the compound having both an anionic group and an active hydrogen group.

The anionic hydrophilic group added to the blocked polyisocyanate is preferably neutralized with an amine compound, which is a basic substance.

Specific examples of the amine compound include an ammonia and water-soluble amino compound.

Specific examples of the water-soluble amino compound include a monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylene diamine, methylethanolamine, dimethylethanolamine, diethylethanolamine, morpholine and the like. Further, tertiary amines such as a triethylamine, dimethylethanolamine and the like may also be included and used. These amine compounds may be used alone or in combination of two or more.

### [Method for producing component (A)]

Component (A) can be obtained, but is not particularly limited to, by reacting the polyisocyanate, the blocking agent, and the nonionic hydrophilic compound.

The reaction between the polyisocyanate and the nonionic hydrophilic compound and the reaction between the polyisocyanate and the blocking agent can be carried out at the same time, and can also be carried out in such a manner that after carrying out any one of the reactions in advance, the second and subsequent reactions are carried out. Among them, it is preferable that the reaction between the polyisocyanate and the nonionic hydrophilic compound be performed first to obtain a hydrophilic compound-modified polyisocyanate modified with a nonionic hydrophilic compound, followed by reacting the resulting hydrophilic compound-modified polyisocyanate with a blocking agent.

The reaction between the polyisocyanate and the nonionic hydrophilic compound may be carried out using an organic metal salt, a tertiary amine compound, or an alkali metal alcoholate as a catalyst. Examples of the metal constituting the organic metal salt include a tin, zinc, lead and the like. Examples of the alkali metal include a sodium and the like.

The temperature of the reaction between the polyisocyanate and the nonionic hydrophilic compound is preferably -20°C or higher and 150°C or lower, more preferably 30°C or higher and 130°C or lower. When the reaction temperature is equal to or higher than the above lower limit, the reactivity tends to be higher. Further, when the reaction temperature is equal to or lower than the above upper limit, side reactions tend to be more effectively suppressed.

It is preferable to completely react with the polyisocyanate so that the nonionic hydrophilic compound does not remain in an unreacted state. By not remaining in an unreacted state, there is a tendency to more effectively suppress the deterioration of the water dispersion stability of the blocked polyisocyanate composition and the low-temperature curability when formed into a resin film.

The reaction between the nonionic hydrophilic compound-modified polyisocyanate and the blocking agent can be carried out in the presence or absence of a solvent to obtain a blocked polyisocyanate.

In addition, the blocking agent may be used alone or in combination of two or more.

The amount of the blocking agent added is generally 80 mol% or more and 200 mol% or less, preferably 90 mol% or more and 150 mol% or less, with respect to the total molar amount of isocyanate groups.

Moreover, when using a solvent, a solvent inert to the isocyanate group may be used.

When a solvent is used, the content of nonvolatile matter derived from the polyisocyanate and the blocking agent with respect to 100 parts by mass of the blocked polyisocyanate composition may usually be 10 parts by mass or more and 95 parts by mass or less, preferably be 20 parts by mass or more and 80 parts by mass or less, and more preferably be 30 parts by mass or more and 75 parts by mass or less.

In the blocking reaction, organic metal salts such as a tin, zinc, lead or the like, tertiary amine compounds, alcoholates of alkali metals such as a sodium or the like, and the like may be used as a catalyst.

The amount of the catalyst to be added varies depending on the temperature of the blocking reaction and the like, and it may usually be 0.05 parts by mass or more and 1.5 parts by mass or less, and preferably be 0.1 parts by mass or more and 1.0 parts by mass or less, with respect to 100 parts by mass of polyisocyanate.

The blocking reaction can generally be carried out at -20°C or higher and 150°C or lower, preferably at 0°C or higher and 100°C or lower, and more preferably at 10°C or higher and 80°C or lower. When the temperature of the blocking reaction is equal to or higher than the above lower limit, the reaction rate can be further increased, and when it is equal to or lower than the above upper limit, side reactions can be further suppressed.

After the blocking reaction, a neutralization treatment may be performed by adding an acidic compound or the like.

As the acidic compound, an inorganic acid may be used and an organic acid may also be used. Examples of the inorganic acid include a hydrochloric acid, phosphorous acid, phosphoric acid and the like. Examples of the organic acid include a methanesulfonic acid, p-toluenesulfonic acid, dioctyl phthalate, dibutyl phthalate and the like.

### [Method for producing component (B)]

The method for producing component (B) is not particularly limited, and for example, it can be produced by the same method as the method for producing component (A) described above.

For example, when the blocked polyisocyanate structure (Y) of the blocked polyisocyanate contained in component (B) is structure (II), the following two methods can be mentioned.
1) A method in which the above-described polyisocyanate reacts with the above-described malonic ester having a tertiary alkyl group and the above-described malonic ester having a secondary alkyl group or a primary alkyl group.
2) A method in which the above-described polyisocyanate reacts with at least one blocking agent selected from the group consisting of the above-described malonic acid ester having a tertiary alkyl group, the above-described malonic acid ester having a secondary alkyl group and the above-described malonic acid ester having a primary alkyl group, and an alcohol having a chain alkyl group is added to the resulting reaction product to introduce an alkyl group derived from the alcohol by transesterification of the terminal ester moiety of the reaction product.

Of the above two methods, method 2) is preferable from the viewpoint of reaction control.

The blocking reaction between the polyisocyanate and the blocking agent can be carried out in the presence or absence of a solvent to obtain a blocked polyisocyanate.

As the blocking agent, among the malonic ester compounds, a diisopropyl malonate, di-tert-butyl malonate and a di(2-methyl-2-butyl) malonate are preferable. These blocking agents may be used alone or in combination of two or more.

The amount of the blocking agent added may generally be 80 mol% or more and 200 mol% or less, preferably be 90 mol% or more and 150 mol% or less, with respect to the total molar amount of the isocyanate group.

When using a solvent, a solvent inert to the isocyanate group may be used.

When a solvent is used, the content of nonvolatile matter derived from the polyisocyanate and the blocking agent with respect to 100 parts by mass of the blocked polyisocyanate composition is as described in component (A).

In the blocking reaction, organic metal salts such as a tin, zinc, lead or the like, tertiary amine compounds, alcoholates of alkali metals such as a sodium or the like, and the like may be used as a catalyst.

The amount of catalyst to be added and the blocking reaction temperature are as described in the blocked polyisocyanate composition (A).

After the blocking reaction, a neutralization treatment may be performed by adding an acidic compound or the like. As the acidic compound, the same ones as used for component (A) can be used.

Moreover, when using the hydrophilic compound including a nonionic hydrophilic compound, the reaction also can be carried out using the same method as for component (A).

When producing by the method 2) above, the transesterification reaction is carried out following the blocking reaction.

The alcohol having a chain alkyl group used in the transesterification reaction of method 2) may be any alcohol having a chain alkyl group, and examples thereof include tertiary alcohols such as a tert-butanol, tert-amyl alcohol (2-methyl-2- butanol) or the like.

Moreover, the chain alkyl group of the alcohol may have the same chain alkyl group as that of the blocking agent, or may have a different chain alkyl group. When it has a chain alkyl group different from that of the blocking agent, it is preferable to use a monoalcohol having a chain alkyl group with a different number of alkyl substitutions than the blocking agent. Specifically, for example, when a malonic acid ester having a secondary alkyl group is used alone as the blocking agent, a monoalcohol having a tertiary alkyl group can be used.

When producing by the method of 2), it is preferable that during or after the transesterification reaction, the alcohol produced or the residue of the added alcohol be removed by distillation or the like under normal pressure or reduced pressure.

Among them, it is preferable to remove the generated alcohol by performing an operation such as distillation during the transesterification reaction in order for the transesterification reaction to efficiently proceed. In this case, in order to efficiently remove the alcohol component generated by the exchange reaction, it is more preferable that the boiling point of the added alcohol component be higher than the boiling point of the generated alcohol component.

The transesterification reaction can generally be carried out at 0°C or higher and 150°C or lower, preferably at 30°C or higher and 120°C or lower, and more preferably at 50°C or higher and 100°C or lower. When the temperature of the transesterification reaction is equal to or higher than the above lower limit, the reaction rate can be further increased, and by being equal to or lower than the above upper limit, side reactions can be further suppressed.

The amount of alcohol component in component (B) (that is, the content of blocked isocyanate structures substituted with the chain alkyl groups of alcohol by transesterification) is preferably 0.05 parts by mass or more and 41 parts by mass or less, more preferably 0.1 parts by mass or more and 30 parts by mass or less, and even preferably 0.5 parts by mass or more and 10 parts by mass or less, with respect to 100 parts by mass of solid content of component (B). When the amount of the alcohol component is at least the above lower limit, storage stability of the water-based resin composition can be improved, and when it is at most the above upper limit value, thickening can be further suppressed when the water-based coating material is blended.

### <Other components>

The blocked polyisocyanate composition of the present embodiment may further contain additives such as solvents or the like in addition to the above-described blocked polyisocyanate components.

Examples of solvents include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether (DPDM), propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, tert-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, iso-hexane, cyclohexane, solvent naphtha, mineral spirits and the like. These solvents may be used alone or in combination of two or more. From the viewpoint of dispersibility in water, the solvents preferably have a solubility in water of 5% by mass or more, and specifically, DPDM is preferable.

The blocked polyisocyanate composition of the present embodiment may further contain a surfactant in addition to the blocked polyisocyanate components. The blocked polyisocyanate composition of the present embodiment can have improved dispersibility by containing a surfactant.

Examples of the surfactant include anionic surfactants such as aliphatic soaps, rosin acid soaps, alkyl sulfonates, dialkylaryl sulfonates, alkyl sulfosuccinates, polyoxyethylene alkyl ether sulfates, polyoxyethylene alkylaryl ether sulfates or the like; nonionic surfactants such as a polyoxyethylene alkyl ether, polyoxyethylene alkylaryl ether, polyoxyethylene oxypropylene block copolymer or the like, and the like.

The anionic surfactant preferably has a surface tension of 32 mN/m or more and 51 mN/m or less, more preferably 34 mN/m or more and 50 mN/m or less, even more preferably 36 mN/m or more and 48 mN/m or less, and particularly preferably 37 mN/m or more and 47 mN/m or less, the surface tension being measured by the Wilhelmy method at 25°C with an aqueous solution consisting of water and 0.1% by mass of the anionic dispersant with respect to the total mass of the aqueous solution.

The nonionic surfactant preferably has an HLB (Hydrophile Lipophile Balance) value of 10 or more and 20 or less, more preferably 14 or more and 17 or less.

### <Method for producing blocked polyisocyanate composition>

The blocked polyisocyanate composition of the present embodiment can be obtained by mixing component (A) and component (B), and optionally other constituent components such as a solvent.

Alternatively, components (A) and (B), and optionally other components such as a solvent are mixed at the time of formulating the coating material to obtain the blocked polyisocyanate composition.

Among these, it is preferable to mix components (A) and (B), and optionally other components such as a solvent in advance to produce the blocked polyisocyanate composition.

### <<Resin composition>>

The resin composition of the present embodiment contains a blocked polyisocyanate composition and a polyhydric hydroxy compound. The resin composition of the present embodiment can also be called a one-liquid type resin composition containing a curing agent component and a main agent component.

By containing the blocked polyisocyanate composition, the resin composition of the present embodiment has excellent curability when baked at a low temperature of 90°C or less immediately after production and after storage, the amount of gas generated during storage is suppressed, and the resin film has excellent water resistance.

Further, the resin composition of the present embodiment has excellent storage stability when made into a water-based resin composition, and thus is particularly suitably used as a water-based resin composition.

The constituent components of the resin composition of the present embodiment will be described in detail below.

### <Polyvalent hydroxy compound>

As used herein, the term "polyhydric hydroxy compound" refers to a compound having at least two hydroxyl groups in one molecule, and is also called a "polyol".

Specific examples of the polyhydric hydroxy compound include aliphatic hydrocarbon polyols, polyether polyols, polyester polyols, epoxy resins, fluorine-containing polyols, acrylic polyols and the like.

Among them, polyester polyols, fluorine-containing polyols and acrylic polyols are preferable as the polyhydric hydroxy compound.

### [Aliphatic hydrocarbon polyols]

Examples of the aliphatic hydrocarbon polyol include a hydroxyl-terminated polybutadiene and a hydrogenated product thereof.

### [Polyether polyols]

Examples of the polyether polyol include those obtained by using any one of the following methods (1) to (3).
(1) Polyether polyols or polytetramethylene glycols obtained by adding an alkylene oxide alone or in a mixture thereof to a polyhydric alcohol alone or in a mixture thereof.
(2) Polyether polyols obtained by reacting an alkylene oxide with a polyfunctional compound.
(3) So-called polymer polyols obtained by polymerizing an acrylamide or the like using the polyether polyol obtained in (1) or (2) as a medium.

Examples of the polyhydric alcohol include a glycerol, propylene glycol and the like.

Examples of the alkylene oxide include an ethylene oxide, propylene oxide and the like.

Examples of the polyfunctional compound include an ethylenediamine, ethanolamines and the like.

### [Polyester polyols]

Examples of the polyester polyol include the following polyester polyol (1) or (2).
(1) Polyester polyol resins obtained by a condensation reaction between a dibasic acid alone or in a mixture of two or more thereof and a polyhydric alcohol alone or in a mixture of two or more thereof.
(2) Polycaprolactones obtained by ring-opening polymerization of a ε-caprolactone with a polyhydric alcohol.

Examples of the dibasic acid include carboxylic acids such as a succinic acid, adipic acid, dimer acid, maleic anhydride, phthalic anhydride, isophthalic acid, terephthalic acid, 1,4-cyclohexanedicarboxylic acid or the like.

Examples of the polyhydric alcohol include an ethylene glycol, propylene glycol, diethylene glycol, 1,4-butanediol, neopentyl glycol, 1,6-hexanediol, trimethylpentanediol, cyclohexanediol, trimethylolpropane, glycerol, pentaerythritol, 2-methylolpropanediol, ethoxylated trimethylolpropane and the like.

### [Epoxy resins]

Examples of the epoxy resin include epoxy resins such as a novolak type epoxy resin, β-methyl epichloro type epoxy resin, cyclic oxirane type epoxy resin, glycidyl ether type epoxy resin, glycol ether type epoxy resin, epoxy type aliphatic unsaturated compound, epoxidized fatty acid ester, ester type polycarboxylic acid, aminoglycidyl type epoxy resin, halogenated epoxy resin and resorcinol type epoxy resins, resins obtained by modifying these epoxy resins with amino compounds, polyamide compounds or the like, and the like.

### [Fluorinated polyols]

Examples of the fluorine-containing polyol include copolymers of a fluoroolefin, cyclohexyl vinyl ether, hydroxyalkyl vinyl ether, monocarboxylic acid vinyl ester or the like, as disclosed in Reference 1 (Japanese Unexamined Patent Publication No. S57-34107), Reference 2 (Japanese Unexamined Patent Publication No. S61-275311) and the like.

### [Acrylic polyols]

The acrylic polyols can be obtained, for example, by polymerizing a polymerizable monomer having one or more active hydrogens in one molecule, or copolymerizing a polymerizable monomer having one or more active hydrogens in one molecule, and optionally another monomer copolymerizable with the polymerizable monomer.

Examples of the polymerizable monomer having one or more active hydrogens in one molecule include those shown in (i) to (iii) below. These may be used alone or in combination of two or more.
(i) Acrylic acid esters having an active hydrogen such as a 2-hydroxyethyl acrylate, 2-hydroxypropyl acrylate, 2-hydroxybutyl acrylate or the like;
(ii) Methacrylic acid esters having an active hydrogen such as a 2-hydroxyethyl methacrylate, 2-hydroxypropyl methacrylate, 2-hydroxybutyl methacrylate or the like;
(iii) (Meth)acrylic acid esters having a polyvalent active hydrogen such as an acrylic acid monoester or methacrylic acid monoester of glycerol, acrylic acid monoester or methacrylic acid monoester of trimethylolpropane or the like;

Examples of said other monomer copolymerizable with the polymerizable monomer include the following (i) to (v). These may be used alone or in combination of two or more.
(i) Acrylic acid esters such as a methyl acrylate, ethyl acrylate, isopropyl acrylate, n-butyl acrylate, 2-ethylhexyl acrylate and the like;
(ii) Methacrylates such as a methyl methacrylate, ethyl methacrylate, isopropyl methacrylate, n-butyl methacrylate, isobutyl methacrylate, n-hexyl methacrylate, cyclohexyl methacrylate, lauryl methacrylate, glycidyl methacrylate or the like.
(iii) Unsaturated carboxylic acids such as an acrylic acid, methacrylic acid, maleic acid, itaconic acid or the like;
(iv) Unsaturated amides such as an acrylamide, N-methylol acrylamide, diacetone acrylamide or the like;
(v) A styrene, vinyl toluene, vinyl acetate, acrylonitrile and the like;

In addition, acrylic polyols obtained by copolymerizing polymerizable UV-stable monomers disclosed in Reference Document 3 (Japanese Unexamined Patent Application, First Publication No. H1-261409) and Reference Document 4 (Japanese Unexamined Patent Application, First Publication No. H3-006273), and the like can also be mentioned.

Specific examples of the polymerizable UV-stable monomer include a 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine, 2-hydroxy-4-(3-methacryloxy-2-hydroxypropoxy)benzophenone and the like.

For example, the acrylic polyol can be obtained by solution polymerizing the above monomer components in the presence of a known radical polymerization initiator such as a peroxide or an azo compound, and if necessary, diluting with an organic solvent or the like.

When obtaining a water-based base acrylic polyol, it can be produced by a method of solution polymerizing an olefinic unsaturated compound and converting it into an aqueous layer, a known method such as an emulsion polymerization or the like. In this case, water-solubility or water-dispersibility can be imparted by neutralizing the acidic moieties such as carboxylic acid-containing monomers such as an acrylic acid, methacrylic acid or the like, sulfonic acid-containing monomers, or the like, with amines or ammonia.

### [Hydroxyl value and acid value of polyhydric hydroxy compound]

The hydroxyl value of the polyhydric hydroxy compound contained in the resin composition of the present embodiment is preferably 5 mgKOH/g or more and 300 mgKOH/g or less, more preferably 10 mgKOH/g or more and 280 mgKOH/g or less, and even more preferably 30 mgKOH/g or more and 250 mgKOH/g or less. When the hydroxyl value of the polyhydric hydroxy compound is within the above range, it is possible to obtain a resin film that is superior in various physical properties such as tensile strength or the like. Specifically, when the number of hydroxyl groups in the polyhydroxy compound is at least the above lower limit, the crosslink density of urethane due to the reaction with polyisocyanate is further increased, and the function of urethane bonding is more easily exhibited. On the other hand, when the number of hydroxyl groups in the polyhydric hydroxy compound is not more than the above upper limit, the crosslink density does not increase excessively and the mechanical properties of the resin film are improved. The hydroxyl value of the polyvalent hydroxy compound can be measured, for example, by potentiometric titration, and calculated as a value relative to the solid content in the polyvalent hydroxy compound.

### [Glass transition temperature Tg of polyhydric hydroxy compound]

The glass transition temperature Tg of the polyhydroxy compound contained in the resin composition of the present embodiment is preferably 0°C or higher and 100°C or lower, more preferably 0°C or higher and 90°C or lower, even more preferably 0°C or higher and 80°C or lower, particularly preferably 5°C or higher and 70°C or lower. When the glass transition temperature of the polyhydric hydroxy compound is within the above range, a resin film with superior tensile strength can be obtained. The glass transition temperature of the polyhydric hydroxy compound can be measured using, for example, a differential scanning calorimeter (DSC) measuring device.

### [Weight-average molecular weight Mw of polyhydroxy compound]

The weight-average molecular weight Mw of the polyhydric hydroxy compound is preferably 5.0×10³ or more and 2.0×10⁵ or less, more preferably 5.0×10³ or more and 1.5×10⁵ or less, and even more preferably 5.0×10³ or more and 1.0×10⁵ or less. When the weight-average molecular weight Mw of the polyhydric hydroxy compound is within the above range, it is possible to obtain a resin film that is superior in various physical properties such as tensile strength or the like. The weight-average molecular weight Mw of the polyhydric hydroxy compound is a polystyrene-based weight-average molecular weight measured by gel permeation chromatography (GPC).

### [NCO/OH]

The molar equivalent ratio (NCO/OH) of the isocyanate groups of the blocked polyisocyanate composition to the hydroxyl groups of the polyhydric hydroxy compound contained in the resin composition of the present embodiment is determined depending on the physical properties required for the resin film, and is usually 0.01 to 10.00, preferably 0.10 to 5.00, more preferably 0.20 to 3.00, even more preferably 0.25 to 2.00.

### [Content of blocked polyisocyanate composition]

In the resin composition of the present embodiment, the content of the blocked polyisocyanate is not limited as long as the molar equivalent ratio of the isocyanate groups of the blocked polyisocyanate to the hydroxyl groups of the polyhydroxy compound is within the above range, and it is preferably 1 part by mass or more and 200 parts by mass or less, more preferably 5 parts by mass or more and 180 parts by mass or less, and even more preferably 10 parts by mass or more and 150 parts by mass or less, with respect to 100 parts by mass of the hydroxy compound. When the content of the blocked polyisocyanate is within the above range, a resin film having excellent properties such as tensile strength or the like can be obtained. The content of the blocked polyisocyanate can be calculated, for example, from the blending amount, or can also be calculated by identifying and quantifying using a nuclear magnetic resonance (NMR) method and a gas chromatography/mass spectrometry method (GC/MS method).

### <Other additives>

The resin composition of the present embodiment may further contain other additives.

Examples of said other additives include curing agents capable of reacting with crosslinkable functional groups in polyhydroxy compounds, curing catalysts, solvents, pigments (extender pigments, coloring pigments, metallic pigments, etc.), UV absorbers, light stabilizers, radical stabilizers, anti-yellowing agents for suppressing coloration during the baking process, coating surface conditioners, flow control agents, pigment dispersants, antifoaming agents, thickeners, film-forming aids and the like.

Examples of the curing agent include melamine resins, urea resins, epoxy group-containing compounds or resins, carboxyl group-containing compounds or resins, acid anhydrides, alkoxysilane group-containing compounds or resins, hydrazide compounds and the like.

The curing catalyst may be a basic compound or a Lewis acidic compound.

Examples of the basic compound include metal hydroxides, metal alkoxides, metal carboxylates, metal acetylacetinates, hydroxides of onium salts, onium carboxylates, halides of onium salts, metal salts of active methylene compounds, onium salts of active methylene compounds, aminosilanes, amines, phosphines and the like. As the onium salt, an ammonium salt, a phosphonium salt or a sulfonium salt is suitable.

Examples of the Lewis acidic compound include organic tin compounds, organic zinc compounds, organic titanium compounds, organic zirconium compounds, and the like.

Examples of the solvent include those exemplified for the blocked polyisocyanate composition.

In addition, as the pigments (extender pigments, color pigments, metallic pigments, etc.), ultraviolet absorbers, light stabilizers, radical stabilizers, anti-yellowing agents for suppressing coloration during the baking process, coating surface conditioners, flow control agents, pigment dispersants, antifoaming agents, thickeners and film-forming aids, known ones can be appropriately selected and used.

### <Method for producing resin composition>

The resin composition of the present embodiment can be used in either a solvent-based resin composition or as a water-based resin composition, but is preferably used as a water-based resin composition.

In this case, the above-mentioned blocked polyisocyanate composition can be prepared by pre-mixing components (A) and (B), and optionally other components such as a solvent, and then adding the resulting to a polyvalent hydroxy compound as a main component, or can be prepared by adding each of components (A) and (B), and optionally other components such as a solvent to a polyhydric hydroxy compound as a main agent.

Above all, it is preferable to pre-mix components (A) and (B), and optionally other components such as a solvent, and then add the resulting mixture to the polyvalent hydroxy compound as the main ingredient.

When producing a water-based resin composition (aqueous resin composition), first, a polyvalent hydroxy compound, or an aqueous dispersion thereof or a water solution thereof is added with additives such as curing agents capable of reacting with the crosslinkable functional groups in the polyhydric hydroxy compound, curing catalysts, solvents, pigments (extender pigments, colored pigments, metallic pigments, etc.), UV absorbers, light stabilizers, radical stabilizers, anti-yellowing agent for suppressing coloration during the baking process, coating surface conditioner, flow control agents, pigment dispersants, antifoaming agents, thickeners, film-forming aids or the like, according to need. Next, the blocked polyisocyanate composition or its aqueous dispersion is added thereto as a curing agent, and if necessary, water or a solvent is further added to adjust the viscosity. Then, a water-based resin composition (aqueous resin composition) can be obtained by forcibly stirring with a stirring device.

When producing a solvent-based resin composition, first, a polyvalent hydroxy compound or a solvent-diluted product thereof is added with additives such as curing agents capable of reacting with the crosslinkable functional groups in the polyhydric hydroxy compound, curing catalysts, solvents, pigments (extender pigments, colored pigments, metallic pigments, etc.), UV absorbers, light stabilizers, radical stabilizers, anti-yellowing agent for suppressing coloration during the baking process, coating surface conditioner, flow control agents, pigment dispersants, antifoaming agents, thickeners, film-forming aids or the like, according to need. Next, the blocked polyisocyanate composition or its aqueous dispersion is added thereto as a curing agent, and if necessary, water or a solvent is further added to adjust the viscosity. Then, a solvent-based resin composition can be obtained by manual stirring or by using a stirring device such as a mazeler.

### <<Resin film>>

The resin film of the present embodiment can be obtained by curing the resin composition. The resin film of the present embodiment has excellent water resistance.

The resin film of the present embodiment is obtained by applying the resin composition to a substrate using a known method such as a roll painting, curtain flow painting, spray painting, bell painting, electrostatic coating or the like, followed by curing it by heating.

The heating temperature is preferably about 70°C or higher and about 120°C or lower, more preferably about 70°C or higher and about 110°C or lower, and even more preferably about 75°C or higher and about 100°C or lower, from the viewpoint of energy saving and heat resistance of the substrate.

The heating time is preferably from about 1 minute to about 60 minutes, more preferably from about 2 minutes to about 40 minutes, from the viewpoint of energy saving and heat resistance of the substrate.

The substrate is not particularly limited, and examples thereof include outer panel parts of automobile bodies such as passenger cars, trucks, motorcycles, buses or the like; automobile parts such as bumpers or the like; outer panel parts of home appliances such as mobile phones, audio equipment or the like, various films, and the like. Among them, outer panel parts of automobile bodies or automobile parts are preferable.

The material of the substrate is not particularly limited, and examples thereof include metal materials such as an iron, aluminum, brass, copper, tinplate, stainless steel, galvanized steel, zinc alloy (Zn-Al, Zn-Ni, Zn-Fe, etc.) plated steel or the like; resins such as a polyethylene resin, polypropylene resin, acrylonitrile-butadiene-styrene (ABS) resin, polyamide resin, acrylic resin, vinylidene chloride resin, polycarbonate resin, polyurethane resin, epoxy resin or the like, various plastic materials such as FRP or the like; inorganic materials such as glass, cement, concrete or the like; wood; fibrous materials such as paper, cloth or the like. Among them, metal materials or plastic materials are preferable.

The substrate may be one in which the surface of the above-described metal materials or the metal surface of the car bodies etc. formed from the above-described metal materials is subjected to a surface treatment such as a phosphate treatment, chromate treatment, complex oxide treatment, etc. and may also be one further having a coating film thereon The substrate on which a coating film is formed may be a substrate that has been subjected to a surface treatment as necessary and has an undercoat film formed thereon, such as a car body on which an undercoat film is formed with an electrodeposition coating material. The substrate may be one in which a surface treatment is applied to a surface of the above-described plastic materials or a plastic surface of automobile parts etc. formed from the above-described metal materials. In addition, the substrate may be a combination of a plastic material and a metal material.

Since the resin film of the present embodiment has excellent low-temperature curability, it can be suitably used as a coating film for materials with low heat resistance and products in various fields where energy saving is required.

### <<Laminate>>

The laminate of the present embodiment is obtained by laminating one or more layers of the resin film on a substrate.

The thickness of one layer of the resin film is 1 µm or more and 50 µm or less.

The laminate of the present embodiment has excellent water resistance by including the resin film.

The laminate of the present embodiment may include two or more layers of the resin films having the same composition, or may include two or more layers of the resin films having different compositions.

Further, examples of the substrate include those exemplified in the above "resin film".

The laminate of the present embodiment can be obtained by applying each of the above-described resin compositions on a substrate using a known method such as roll coating, curtain flow coating, spray coating, bell coating, electrostatic coating or the like, and curing and heating each of them. Alternatively, it can also be obtained by heating and curing all the layers together after coating.

In addition to the substrate and the resin film, the laminate of the present embodiment can include layers made of other known components such as a primer layer, an adhesive layer, and a decorative layer.

### [Examples]

The present embodiment will be described in more detail below based on the Examples and Comparative Examples, but the present embodiment is not limited by the following Examples.

### <Test items>

Physical properties of the polyisocyanates and blocked polyisocyanate components obtained in Synthesis Examples, and physical properties of the blocked polyisocyanate compositions obtained in Examples and Comparative Examples were measured and evaluated according to the methods described below.

### [Physical property 1]

### (Isocyanate group (NCO) content)

In order to measure the NCO content of polyisocyanate, a polyisocyanate before blocking with a blocking agent was used as a measurement sample.

First, 2 g or more and 3 g or less of a measurement sample was accurately weighed in a flask (Wg). Then, 20 mL of toluene was added to dissolve the measurement sample. Next, 20 mL of a toluene solution of 2N di-n-butylamine was added, and after mixing, the mixture was allowed to stand at room temperature for 15 minutes. Then 70 mL of isopropyl alcohol was added and mixed. Then, the resulting liquid was titrated with an indicator with a 1N hydrochloric acid solution (Factor F). The obtained titration value was represented by V2 mL. The titration value obtained without the polyisocyanate sample was represented by V1 ml. Then, the isocyanate group (NCO) content (% by mass) of the polyisocyanate was calculated by the following formula.

Isocyanate group (NCO) content (% by mass) = (V1-V2) × F × 42/(W × 1,000) × 100

In addition, the effective NCO content of the blocked isocyanate composition was calculated by the following formula.

Effective NCO content [mass%] = { 100 × (mass of isocyanate groups in solid content of the polyisocyanate used in blocking reaction)} / (mass of blocked polyisocyanate composition after blocking reaction)

### [Physical property 2]

### (Number-average molecular weight and weight-average molecular weight)

The number-average molecular weight and weight-average molecular weight are the number-average molecular weight and weight-average molecular weight measured by gel permeation chromatography (GPC) with reference to polystyrene standards using the following apparatus.

In order to measure the number-average molecular weight of polyisocyanate, a polyisocyanate before being blocked with a blocking agent was used as a measurement sample.

Regarding the weight-average molecular weight, the blocked polyisocyanate composition or the polyvalent hydroxy compound was used as it was as a measurement sample. Measurement conditions are shown below.

### (Measurement conditions)

Apparatus: HLC-802A, manufactured by Tosoh Corporation
Column:
   G1000HXL × 1,
   G2000HXL × 1,
   G3000HXL × 1, manufactured by Tosoh Corporation
Carrier: tetrahydrofuran
Detection method: differential refractometer

### [Physical property 3]

### (Average number of isocyanate groups)

The average number of isocyanate groups (average number of NCOs) in the polyisocyanate was determined by the following formula. It should be noted that in the formula, "Mn" denotes the number-average molecular weight of the polyisocyanate, and the values calculated in [Physical property 2] above were used. "NCO content" denotes the isocyanate group content of the polyisocyanate measured before blocking with a blocking agent, and the values calculated in [Physical property 1] above were used.Average number of isocyanate groups = (Mn × NCO content × 0.01)/42

### [Physical property 4]

### (Solid content of blocked polyisocyanate composition)

The solid content of the blocked polyisocyanate composition was determined as follows.

First, an aluminum dish with a bottom diameter of 38 mm was precisely weighed. Next, about 1 g of the blocked polyisocyanate composition produced in each of Examples and Comparative Examples was placed on the aluminum dish and weighed accurately (W1). The blocked polyisocyanate composition was then adjusted to a uniform thickness. Next, the blocked polyisocyanate composition placed on the aluminum dish was held in an oven at 105°C for 1 hour. Then, after the aluminum dish reached room temperature, the blocked polyisocyanate composition remaining in the aluminum dish was precisely weighed (W2). Then, the solid content (% by mass) of the blocked polyisocyanate composition was calculated by the following formula. Solid content of blocked polyisocyanate composition (% by mass) = W2/W1 × 100

### [Physical property 5]

### (Modification amount and composition ratio of nonionic hydrophilic groups)

The modification amount and composition ratio of nonionic hydrophilic groups in each blocked polyisocyanate component and blocked polyisocyanate composition were calculated by the following method, assuming that all of the nonionic hydrophilic compounds used were reacted with the isocyanate groups of the polyisocyanate.

That is, the modification amount of nonionic hydrophilic groups was calculated as a percentage (mol%) of the ratio of the molar amount of the nonionic hydrophilic compound to the molar amount of the isocyanate groups in the raw material polyisocyanate.

The composition ratio of the nonionic hydrophilic group was calculated as a percentage (% by mass) of the ratio of the mass of the nonionic hydrophilic compound to the total mass of the solid content of the blocked polyisocyanate component or blocked polyisocyanate composition obtained.

### [Physical property 6]

### (Modification amount of blocked isocyanate structure)

The modification amount of the blocked isocyanate structure in each of the blocked polyisocyanate component and the blocked polyisocyanate composition was calculated by the following method, assuming that all of the blocking agents used were reacted.

That is, the modification amount of the blocked isocyanate structure was calculated as a percentage (mol%) of the ratio of the molar amount of the blocking agent to the molar amount of the isocyanate groups in the raw material polyisocyanate.

### [Physical property 7-1]

### (Curing temperature of blocked polyisocyanate component)

Acrylic polyol (manufactured by Nuplex Co., Ltd., "Setalux (registered trademark) 1767" (trade name), OH (% by mass) (on solids) = 4.5, solid content: 65% by mass) and each blocked polyisocyanate component were blended so that the ratio of the molar amount of isocyanate groups to the molar amount of hydroxyl groups (isocyanate groups/hydroxyl groups) was 1.0, and the solid content of the coating material was adjusted to 50% by mass with butyl acetate. The adjusted resulting solution was coated on a polypropylene (PP) plate so that the thickness of the dried film was 40 µm, and then heated and dried at a temperature of 80° C or higher at an interval of 5°C for 30 minutes to obtain a resin film. The obtained resin film was immersed in acetone at 23°C for 24 hours, and the percentage (mass %) of a value obtained by dividing the mass of the undissolved portion by the mass before immersion was determined as the gel fraction. The temperature at which the gel fraction reached 80% by mass or more was defined as the curing temperature of the blocked polyisocyanate component.

### [Physical property 7-2]

### (Curing temperature of blocked polyisocyanate component)

Polycaprolactone triol (manufactured by Daicel Corporation, "Plaxel 308" (trade name), number-average molecular weight: 850) and each blocked polyisocyanate component were blended so that the ratio of the molar amount of isocyanate groups to the molar amount of hydroxyl groups (isocyanate group/ hydroxyl group) was 1.0, and the total amount of the polycaprolactone triol and the blocked polyisocyanate component was adjusted to 50% by mass of the entire adjusted solution using butyl acetate. About 2 ml of the obtained adjusted solution was added onto an aluminum cup and dried by heating at a temperature of 80°C or higher at an interval of 5°C for 30 minutes to obtain a resin film. The resulting resin film was immersed in acetone at 23° C for 24 hours, and the percentage (mass %) of a value obtained by dividing the mass of the undissolved portion by the mass before immersion was determined as the gel fraction. The temperature at which the gel fraction reached 80% by mass or more was defined as the curing temperature of the blocked polyisocyanate component.

### [Physical property 8]

### (Quantification of ratio of structure (II-1))

The solvent and other components were removed from each blocked polyisocyanate component (B) using an evaporator at a temperature of 50°C or lower, and dried under reduced pressure, followed by quantifying the ratio (mol%) of structure (11-1) to 100 mol% of structure (II) by ¹³C-NMR.

### (Measurement condition)

Device: JEOL-ECZ500 (SC) (trade name) manufactured by JEOL
Solvent: heavy chloroform
Accumulated times: 5,120 times
Concentration of sample: 50 wt/vol%
Chemical shift standard: Heavy chloroform was set to 77.0 mass ppm.

### [Preparation of water-based resin composition]

An acrylic polyol as a water-based main agent (manufactured by Nuplex, "Setaqua (registered trademark) 6515" (trade name), OH (mass%) (on solids) = 3.3, acid value (mgKOH/g) = 9.9, solid content: 45% by mass) and each blocked polyisocyanate composition were blended so that the ratio of the molar amount of isocyanate groups to the molar amount of hydroxyl groups (isocyanate groups/hydroxyl groups) was 0.80. Further, ion-exchanged water was blended and a small amount of a dimethylaminoethanol was added to adjust the pH to about 8.0 or more and 8.5 or less and adjust the solid content to 40% by mass. Then, the solution was stirred at 1,000 rpm for 15 minutes using a homodisper to defoam, and then a water-based resin composition was obtained.

### [Evaluation 1]

### (Dispersibility)

The water-based resin composition obtained in the above "preparation of water-based resin composition" was allowed to stand at room temperature, and the appearance of the water-based resin composition was evaluated according to the following evaluation criteria.

### (Evaluation criteria)

⊚: No change even after more than 72 hours
∘: Sedimentation was observed after more than 24 hours and 72 hours or less
△: Sedimentation was observed after more than 8 hours and 24 hours or less
×: Sedimentation was observed after 8 hours or less

### [Evaluation 2]

### (Low-temperature curability)

The resin composition obtained in the above "Preparation of water-based resin composition" was coated on a polypropylene (PP) plate so that the dried film thickness was 40 µm, and then dried by heating at 85°C and 90°C for 30 minutes to obtain a resin film. The resulting resin film was immersed in acetone at 23°C for 24 hours, and the percentage (% by mass) of a value obtained by dividing the mass of the undissolved portion by the mass before immersion was determined as the gel fraction. Using the calculated gel fraction, low-temperature curability was evaluated according to the following evaluation criteria.

### (Evaluation criteria)

o: Gel fraction was 80% by mass or more at 85°C
Δ: Gel fraction was 80% by mass or more at 90°C
×: Gel fraction was less than 80% by mass at 90°C

### [Evaluation 3]

### (Amount of gas generated during storage)

Water was further added to the water-based resin composition obtained in the above "preparation of water-based resin composition" to adjust the solid content to 15% by mass. Next, 200 g of the prepared solution was charged into an Erlenmeyer flask, and a burette was set. The Erlenmeyer flask containing the solution was placed in a water bath at 40°C for 10 days, changes in the liquid surface of the burette were recorded, and the amount of gas generated was calculated. Using the calculated gas generation amount, the amount of generated gas during storage was evaluated according to the following evaluation criteria.

### (Evaluation criteria)

∘: Less than 20 mL
△: 20 mL or more and less than 25 mL
×: 25 mL or more

### [Evaluation 4]

### (Low-temperature curability after storage)

The resin composition obtained in the above "preparation of water-based resin composition" was stored at 40°C for 10 days. The resin composition after storage was coated on a polypropylene (PP) plate so that the thickness of the dried film was 40 µm, and then dried by heating at 85°C for 30 minutes to obtain a resin film. The obtained resin film was immersed in acetone at 23°C for 24 hours, and the percentage (% by mass) of a value obtained by dividing the mass of the undissolved portion by the mass before immersion was determined as the gel fraction. Using the calculated gel fraction, the low-temperature curability after storage was evaluated according to the following evaluation criteria.

### (Evaluation criteria)

∘: Gel fraction was 80% by mass or more
△: Gel fraction was 70% by mass or more and less than 80% by mass
×: Gel fraction was less than 70% by mass

### [Evaluation 5]

### (Water resistance)

The resin composition obtained in the above "preparation of water-based resin composition" was coated on a glass plate so that the thickness of the dried film was 40 µm, and then dried by heating at 85°C for 30 minutes to obtain a resin film. 2 mL of ion-exchanged water was added dropwise to the obtained resin film, and the film was left at 23°C for 8 hours. After that, the ion-exchanged water was wiped off, and the appearance was evaluated according to the following evaluation criteria.

### [Evaluation 6]

### (Gel fraction retention rate)

The resin composition obtained in the above "preparation of water-based resin composition" was stored at 40°C for 5 days. The resin composition after storage was coated on a polypropylene (PP) plate so that the thickness of the dried film was 40 µm, and then dried by heating at 85°C for 30 minutes to obtain a resin film. The obtained resin film was immersed in acetone at 23°C for 24 hours, and the percentage (% by mass) of a value obtained by dividing the mass of the undissolved portion by the mass before immersion was determined as the gel fraction. The obtained gel fraction was divided by the gel fraction when heated at 85°C for 30 minutes, which was calculated in Evaluation 2 "low-temperature curability", and the percentage of the divided value was determined as the gel fraction retention rate.

### (Evaluation criteria)

∘: Gel fraction retention rate was 85% by mass or more
Δ: Gel fraction retention rate was 80% by mass or more and less than 85% by mass
×: Gel fraction retention was less than 80% by mass

### (Evaluation criteria)

∘: No change
Δ: Only blisters occurred
×: Whitening and blistering occurred

### <Synthesis of polyisocyanate>

### [Synthesis Example 1-1]

### (Synthesis of polyisocyanate P-1)

A four-necked flask equipped with a thermometer, stirring blades and a reflux condenser was charged with, under a nitrogen stream, 100 parts by mass of HDI and 5.3 parts by mass of a polyester polyol (polycaprolactone triol) (manufactured by Daicel Chemical Industries, "PLAXEL 303" (trade name), average number of functional groups: 3, number-average molecular weight: 300) derived from a trihydric alcohol and a ε-caprolactone, and the temperature inside the reactor was maintained at 89°C for 1 hour while stirring to carry out a urethane reaction. After that, the temperature inside the reactor was maintained at 63°C, a tetramethylammonium capriate as an isocyanurate-forming catalyst was added, and when the yield reached 52% by mass, a phosphoric acid was added to stop the reaction. After filtering the reaction solution, unreacted HDI was removed using a thin film evaporator to obtain an isocyanurate-type polyisocyanate (hereinafter sometimes referred to as "polyisocyanate P1-1").

The obtained polyisocyanate P-1 had an NCO content of 18.6% by mass, a number-average molecular weight of 1,220, and an average number of isocyanate groups of 5.4. Further, the obtained polyisocyanate P-1 was subjected to ¹H-NMR analysis to confirm the presence of isocyanurate groups.

### [Synthesis Example 1-2]

### (Synthesis of polyisocyanate P-2)

A four-necked flask equipped with a thermometer, stirring blades and a reflux condenser was charged with 100 parts by mass of HDI under a nitrogen stream, the temperature inside the reactor was maintained at 60°C while stirring, and 0.095 parts by mass of a trimethylbenzylammonium hydroxide was added, and after 4.5 hours, when the conversion rate reached 40% by mass, 0.02 parts by mass of a phosphoric acid was added to stop the reaction. After filtering the reaction solution, unreacted HDI was removed using a thin film evaporator to obtain an isocyanurate-type polyisocyanate (hereinafter sometimes referred to as "polyisocyanate P-2"). The obtained polyisocyanate P-2 had an NCO content of 22.0% by mass, a number-average molecular weight of 655, and an average number of isocyanate groups of 3.4. Further, the obtained polyisocyanate P-2 was subjected to ¹H-NMR analysis to confirm the presence of isocyanurate groups.

### <Preparation of blocked polyisocyanate component (A)>

### [Synthesis Example 2-1]

### (Preparation of blocked polyisocyanate component A-1)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 87.1 parts by mass of a methoxypolyethylene glycol (MPG-081, ethylene oxide repeating unit: 15, manufactured by Nippon Nyukazai Co., Ltd.) (an amount of 30 mol% with respect to 100 mol% of the isocyanate groups of the polyisocyanate P-1) and 33.0 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 70 mol% with respect to 100 mol% of the isocyanate groups of the polyisocyanate P-1, and a dipropylene glycol dimethyl ether (DPDM) was further added to adjust the solid content to 60% by mass. Next, while stirring, 1.5 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 6 hours or longer. After confirming the disappearance of the isocyanate group peak by infrared spectroscopy (IR), a blocked polyisocyanate component A-1 was obtained.

### [Synthesis Example 2-2]

### (Preparation of blocked polyisocyanate component A-2)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 29.0 parts by mass of a methoxypolyethylene glycol (MPG-081, ethylene oxide repeating unit: 15, manufactured by Nippon Nyukazai Co., Ltd.) (an amount of 10 mol% with respect to 100 mol% of the isocyanate groups of the polyisocyanate P-1) and 22.8 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 90 mol% with respect to 100 mol% of the isocyanate groups of the polyisocyanate P-1, and a dipropylene glycol dimethyl ether (DPDM) was further added to adjust the solid content to 60% by mass. Next, while stirring, 1.3 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 6 hours or longer. After confirming the disappearance of the isocyanate group peak by infrared spectroscopy (IR), a blocked polyisocyanate component A-2 was obtained.

### [Synthesis Example 2-3]

### (Preparation of blocked polyisocyanate component A-3)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), and 87.1 parts by mass of a methoxypolyethylene glycol (MPG-081, ethylene oxide repeating unit: 15, manufactured by Nippon Nyukazai Co., Ltd.) (an amount of 30 mol% with respect to 100 mol% of the isocyanate groups of the polyisocyanate P-1) were mixed under a nitrogen stream and reacted at 120°C for 3 hours. The reaction solution was cooled to 80°C, a 3,5-dimethylpyrazole (DPM) was then added in an amount of 70 mol% with respect to 100 mol% of the isocyanate groups of the polyisocyanate P-1, the external bath was adjusted so that the solution temperature was 80°C, and the blocking reaction was carried out at 80°C for 30 minutes or longer. After confirming the disappearance of the isocyanate group peak by infrared spectroscopy (IR), a dipropylene glycol dimethyl ether (DPDM) was added to adjust the solid content to 60% by mass to obtain a blocked polyisocyanate component A-3.

### [Synthesis Example 2-4]

### (Preparation of blocked polyisocyanate component A-4)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 17.4 parts by mass of a methoxypolyethylene glycol (MPG-081, ethylene oxide repeating unit: 15, manufactured by Nippon Nyukazai Co., Ltd.) (an amount of 6 mol% with respect to 100 mol% of the isocyanate groups of the polyisocyanate P-1) and 20.7 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 94 mol% with respect to 100 mol% of the isocyanate groups of the polyisocyanate P-1, and a dipropylene glycol dimethyl ether (DPDM) was further added to adjust the solid content to 60% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 6 hours or longer. After confirming the disappearance of the isocyanate group peak by infrared spectroscopy (IR), a blocked polyisocyanate component A-4 was obtained.

### [Synthesis Example 2-5]

### (Preparation of blocked polyisocyanate component A-5)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 23.2 parts by mass of a methoxypolyethylene glycol (MPG-081, ethylene oxide repeating unit: 15, manufactured by Nippon Nyukazai Co., Ltd.) (an amount of 8 mol% with respect to 100 mol% of the isocyanate groups of the polyisocyanate P-1), 3.8 parts by mass of a methoxypolyethylene glycol (MPG-130, ethylene oxide repeating unit: 9, manufactured by Nippon Nyukazai Co., Ltd.) (an amount of 2 mol% with respect to 100 mol% of isocyanate groups of polyisocyanate P-1), and 22.4 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 90 mol% with respect to 100 mol% of the isocyanate groups of the polyisocyanate P-1, and a dipropylene glycol dimethyl ether (DPDM) was further added to adjust the solid content to 60% by mass. Next, while stirring, 1.3 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 6 hours or longer. After confirming the disappearance of the isocyanate group peak by infrared spectroscopy (IR), a blocked polyisocyanate component A-5 was obtained.

### <Preparation of blocked polyisocyanate component (B)>

### [Synthesis Example 3-1]

### (Preparation of blocked polyisocyanate component B-1)

In a four-necked flask equipped with a thermometer, stirring blades and a reflux condenser, under a nitrogen stream, 100 parts by mass of the polyisocyanate P-1 obtained in Synthesis Example 1-1 and 100 mol% of a diisopropyl malonate with respect to 100 mol% of the isocyanate groups of the polyisocyanate P-1 were added, and a dipropylene glycol dimethyl ether (DPDM) was further added to adjust the solid content to 70 mass%. Next, while stirring, 1.1 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 168 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-1. The ratio of structure (II-1) to 100 mol% of structure (II) in the obtained blocked polyisocyanate component B-1 was measured and found to be 54 mol%.

### [Synthesis Example 3-2]

### (Preparation of blocked polyisocyanate component B-2)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 0.7 parts by mass of a methoxypolyethylene glycol (MPG-081, ethylene oxide repeating unit: 15, manufactured by Nippon Nyukazai Co., Ltd.) (an amount of 0.25 mol% with respect to 100 mol% of the isocyanate groups of polyisocyanate P-1) and 17.8 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 99.75 mol% with respect to 100 mol% of the isocyanate groups of polyisocyanate P-1, and a dipropylene glycol dimethyl ether (DPDM) was further added to adjust the solid content to 70% by mass. Next, while stirring, 1.1 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 168 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-2. The ratio of structure (11-1) to 100 mol% of structure (11) in the obtained blocked polyisocyanate component B-2 was measured and found to be 54 mol%.

### [Synthesis Example 3-3]

### (Preparation of blocked polyisocyanate component B-3)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 5.8 parts by mass of a methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) and 18.7 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 98 mol% with respect to 100 mol% of the isocyanate groups of polyisocyanate P-1, and a dipropylene glycol dimethyl ether (DPDM) was further added to adjust the solid content to 70% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 165 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-3. The ratio of structure (II-1) to 100 mol% of structure (II) in the obtained blocked polyisocyanate component B-3 was measured and found to be 54 mol%.

### [Synthesis Example 3-4]

### (Preparation of blocked polyisocyanate component B-4)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 11.6 parts by mass of a methoxypolyethylene glycol (MPG-081, ethylene oxide repeating unit: 15, manufactured by Nippon Nyukazai Co., Ltd.) (an amount of 4 mol% with respect to 100 mol% of the isocyanate groups of polyisocyanate P-1) and 19.7 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 96 mol% with respect to 100 mol% of the isocyanate groups of polyisocyanate P-1, and a dipropylene glycol dimethyl ether (DPDM) was further added to adjust the solid content to 70% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 161 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-4. The ratio of structure (11-1) to 100 mol% of structure (11) in the obtained blocked polyisocyanate component B-4 was measured and found to be 54 mol%.

### [Synthesis Example 3-5]

### (Preparation of blocked polyisocyanate component B-5)

In a four-necked flask equipped with a thermometer, stirring blades and a reflux condenser, 100 parts by mass of the polyisocyanate P-2 obtained in Synthesis Example 1-2, 0.01 parts by mass of a 2-ethylhexyl acid phosphate (manufactured by Johoku Kagaku Kogyo Co., Ltd., "JP-508T" (trade name)), 13.9 parts by mass of a methoxypolyethylene glycol (MPG-081, ethylene oxide repeating unit: 15, manufactured by Nippon Nyukazai Co., Ltd.) (an amount of 4 mol% with respect to 100 mol% of the isocyanate groups of polyisocyanate P-1) and 20.1 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 96 mol% with respect to 100 mol% of the isocyanate groups of polyisocyanate P-2, and a dipropylene glycol dimethyl ether (DPDM) was further added to adjust the solid content to 70% by mass. Next, while stirring, 1.3 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 192 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-5. The ratio of structure (II-1) to 100 mol% of structure (II) in the obtained blocked polyisocyanate component B-5 was measured and found to be 54 mol%.

### [Synthesis Example 3-6]

### (Preparation of blocked polyisocyanate component B-6)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 17.4 parts by mass of a methoxypolyethylene glycol (MPG-081, ethylene oxide repeating unit: 15, manufactured by Nippon Nyukazai Co., Ltd.) (an amount of 6 mol% with respect to 100 mol% of the isocyanate groups of polyisocyanate P-1) and 54.2 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 94 mol% with respect to 100 mol% of the isocyanate groups of polyisocyanate P-1, and a dipropylene glycol dimethyl ether (DPDM) was further added to adjust the solid content to 70% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 158 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-6. The ratio of structure (11-1) to 100 mol% of structure (11) in the obtained blocked polyisocyanate component B-6 was measured and found to be 54 mol%.

### [Synthesis Example 3-7]

### (Preparation of blocked polyisocyanate component B-7)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), and 6.3 parts by mass of a methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) were mixed under a nitrogen stream and reacted at 120°C for 3 hours. The reaction solution was cooled to 60°C, and 98 mol% of a 2-ethylimidazole with respect to 100 mol% of the isocyanate groups of polyisocyanate P-1 was added, the external bath was adjusted so that the solution temperature was 60°C to carry out the blocking reaction at 60°C for 90 minutes or longer. After confirming the disappearance of the isocyanate group peak by infrared spectroscopy (IR), dipropylene glycol dimethyl ether (DPDM) was added to adjust the solid content to 60% by mass to obtain blocked polyisocyanate component B-7.

### [Synthesis Example 3-8]

### (Preparation of blocked polyisocyanate component B-8)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 14.5 parts by mass of a methoxypolyethylene glycol (MPG-081, ethylene oxide repeating unit: 15, manufactured by Nippon Nyukazai Co., Ltd.) (an amount of 5 mol% with respect to 100 mol% of the isocyanate groups of the polyisocyanate P-1), 1.9 parts by mass of methoxypolyethylene glycol (MPG-130, ethylene oxide repeating unit: 9, manufactured by Nippon Nyukazai Co., Ltd.) (an amount of 1 mol% with respect to 100 mol% of the isocyanate groups of polyisocyanate P-1) and 20.5 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 94 mol% with respect to 100 mol% of the isocyanate groups of polyisocyanate P-1, and a dipropylene glycol dimethyl ether (DPDM) was further added to adjust the solid content to 70% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 160 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-8. The ratio of structure (II-1) to 100 mol% of structure (II) in the obtained blocked polyisocyanate component B-8 was measured and found to be 54 mol%.

### [Synthesis Example 3-9]

### (Preparation of blocked polyisocyanate component B-9)

In a four-necked flask equipped with a thermometer, stirring blades and a reflux condenser, 100 parts by mass of the polyisocyanate P-1 obtained in Synthesis Example 1-1, 0.01 parts by mass of a 2-ethylhexyl acid phosphate (manufactured by Johoku Kagaku Kogyo Co., Ltd., "JP-508T" (trade name)), 27.1 parts by mass of a poly (oxyethylene, oxypropylene) glycol monobutyl ether (average molecular weight: 970) (hereinafter sometimes abbreviated as "EO-PO") (an amount of 6 mol% with respect to 100 mol% of isocyanate groups of polyisocyanate P-1) and 22.4 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 94 mol% with respect to 100 mol% of the isocyanate groups of polyisocyanate P-1, and a dipropylene glycol dimethyl ether (DPDM) was further added to adjust the solid content to 70% by mass. Next, while stirring, 1.2 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 158 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-9. The ratio of structure (11-1) to 100 mol% of structure (II) in the obtained blocked polyisocyanate component B-9 was measured and found to be 54 mol%.

### [Synthesis Example 3-10]

### (Preparation of blocked polyisocyanate component B-10)

In a four-necked flask equipped with a thermometer, stirring blades and a reflux condenser, 100 parts by mass of the polyisocyanate P-1 obtained in Synthesis Example 1-1, 0.02 parts by mass of a 2-ethylhexyl acid phosphate (manufactured by Johoku Kagaku Kogyo Co., Ltd., "JP-508T" (trade name)), 87.1 parts by mass of a methoxypolyethylene glycol (MPG-081, ethylene oxide repeating unit: 15, manufactured by Nippon Nyukazai Co., Ltd.) (an amount of 30 mol% with respect to 100 mol% of the isocyanate groups of polyisocyanate P-1) and 33.0 parts by mass of a dipropylene glycol dimethyl ether (DPDM) were mixed under a nitrogen stream and reacted at 120°C for 3 hours. The reaction solution was cooled to 40°C, a diisopropyl malonate was then added in an amount of 70 mol% with respect to 100 mol% of the isocyanate groups of polyisocyanate P-1, and a dipropylene glycol dimethyl ether (DPDM) was further added to adjust the solid content to 70% by mass. Next, while stirring, 1.5 parts by mass of a methanol solution containing a sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 118 parts by mass of a 2-methyl-2-butanol (400 mol% with respect to the blocked isocyanate groups) was added, and the reaction was carried out at 80°C for 3 hours while removing the generated isopropyl alcohol by distillation under normal pressure. After that, the isopropanol and 2-methyl-2-butanol were distilled off at 60°C under reduced pressure (50 kPa), and finally a dipropylene glycol dimethyl ether (DPDM) was added to adjust the solid content to 60% by mass, thereby obtaining a blocked polyisocyanate component B-10. The ratio of structure (11-1) to 100 mol% of structure (II) in the obtained blocked polyisocyanate component B-10 was measured and found to be 54 mol%.

### [Synthesis Example 3-11]

### (Preparation of blocked polyisocyanate component B-11)

In a four-necked flask equipped with a thermometer, stirring blades and a reflux condenser, 100 parts by mass of polyisocyanate P-1 obtained in Synthesis Example 1-1, 0.01 parts by mass of 2-ethylhexyl acid phosphate (manufactured by Johoku Kagaku Kogyo Co., Ltd., "JP-508T" (trade name)), 5.8 parts by mass of methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) and 18.7 parts by mass of a dipropylene glycol dimethyl ether (DPDM) were mixed under a nitrogen stream and reacted at 120°C for 3 hours. The reaction solution was cooled to 40°C, diisopropyl malonate was then added in an amount of 98 mol% with respect to 100 mol% of the isocyanate groups of polyisocyanate P-1, and dipropylene glycol dimethyl ether (DPDM) was further added to adjust the solid content to 70% by mass. Next, while stirring, 1.2 parts by mass of a methanol solution containing sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 82.4 parts by mass of 2-methyl-2-butanol (200 mol% with respect to the blocked isocyanate groups) was added, and the reaction was carried out at 80°C for 1 hour while removing the generated isopropyl alcohol by distillation under normal pressure. After that, isopropanol and 2-methyl-2-butanol were distilled off at 60°C under reduced pressure (50 kPa), and finally dipropylene glycol dimethyl ether (DPDM) was added to adjust the solid content to 60% by mass, thereby obtaining blocked polyisocyanate component B-11. The ratio of structure (II-1) to 100 mol% of structure (II) in the obtained blocked polyisocyanate component B-11 was measured and found to be 5 mol%.

### [Synthesis Example 3-12]

### (Preparation of blocked polyisocyanate component B-12)

In a four-necked flask equipped with a thermometer, stirring blades and a reflux condenser, 100 parts by mass of polyisocyanate P-1 obtained in Synthesis Example 1-1, 0.01 parts by mass of 2-ethylhexyl acid phosphate (manufactured by Johoku Kagaku Kogyo Co., Ltd., "JP-508T" (trade name)), 5.8 parts by mass of methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) and 18.7 parts by mass of a dipropylene glycol dimethyl ether (DPDM) were mixed under a nitrogen stream and reacted at 120°C for 3 hours. The reaction solution was cooled to 40°C, diisopropyl malonate was then added in an amount of 98 mol% with respect to 100 mol% of the isocyanate groups of polyisocyanate P-1, and dipropylene glycol dimethyl ether (DPDM) was further added to adjust the solid content to 70% by mass. Next, while stirring, 1.2 parts by mass of a methanol solution containing sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 82.4 parts by mass of 2-methyl-2-butanol (200 mol% with respect to the blocked isocyanate groups) was added, and the reaction was carried out at 80°C for 3 hours while removing the generated isopropyl alcohol by distillation under normal pressure. After that, isopropanol and 2-methyl-2-butanol were distilled off at 60°C under reduced pressure (50 kPa), and finally dipropylene glycol dimethyl ether (DPDM) was added to adjust the solid content to 60% by mass, thereby obtaining blocked polyisocyanate component B-12. The ratio of structure (11-1) to 100 mol% of structure (II) in the obtained blocked polyisocyanate component B-12 was measured and found to be 25 mol%.

### [Synthesis Example 3-13]

### (Preparation of blocked polyisocyanate component B-13)

In a four-necked flask equipped with a thermometer, stirring blades and a reflux condenser, 100 parts by mass of polyisocyanate P-1 obtained in Synthesis Example 1-1, 0.01 parts by mass of 2-ethylhexyl acid phosphate (manufactured by Johoku Kagaku Kogyo Co., Ltd., "JP-508T" (trade name)), 5.8 parts by mass of methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) and 18.7 parts by mass of a dipropylene glycol dimethyl ether (DPDM) were mixed under a nitrogen stream and reacted at 120°C for 3 hours. The reaction solution was cooled to 40°C, diisopropyl malonate was then added in an amount of 98 mol% with respect to 100 mol% of the isocyanate groups of polyisocyanate P-1, and dipropylene glycol dimethyl ether (DPDM) was further added to adjust the solid content to 70% by mass. Next, while stirring, 1.2 parts by mass of a methanol solution containing sodium methylate (28% by mass with respect to the total mass of the solution) was added dropwise, the external bath was adjusted so that the solution temperature was 55°C, and the blocking reaction was carried out at 55°C for 5 hours to obtain a blocked polyisocyanate component intermediate having a solid content of 70% by mass. After that, 82.4 parts by mass of 2-methyl-2-butanol (200 mol% with respect to the blocked isocyanate groups) was added, and the reaction was carried out at 100°C for 8 hours while removing the generated isopropyl alcohol by distillation under normal pressure. After that, isopropanol and 2-methyl-2-butanol were distilled off at 60°C under reduced pressure (50 kPa), and finally dipropylene glycol dimethyl ether (DPDM) was added to adjust the solid content to 60% by mass, thereby obtaining blocked polyisocyanate component B-13. The ratio of structure (II-1) to 100 mol% of structure (II) in the obtained blocked polyisocyanate component B-13 was measured and found to be 74 mol%.

### [Synthesis Example 3-14]

### (Preparation of blocked polyisocyanate component B-14)

In a four-necked flask equipped with a thermometer, stirring blades and a reflux condenser, 100 parts by mass of polyisocyanate P-1 obtained in Synthesis Example 1-1, 0.01 parts by mass of 2-ethylhexyl acid phosphate (manufactured by Johoku Kagaku Kogyo Co., Ltd., "JP-508T" (trade name)), 5.8 parts by mass of methoxypolyethylene glycol (MPG-081, ethylene oxide repeating unit: 15, manufactured by Nippon Nyukazai Co., Ltd.) (an amount of 2 mol% with respect to 100 mol% of the isocyanate groups of polyisocyanate P-1) and 18.7 parts by mass of a dipropylene glycol dimethyl ether (DPDM) were mixed under a nitrogen stream and reacted at 120°C for 3 hours. The reaction solution was cooled to 40°C, di-tert-butyl malonate was then added in an amount of 98 mol% with respect to 100 mol% of the isocyanate groups of polyisocyanate P-1, and dipropylene glycol dimethyl ether (DPDM) was further added to adjust the solid content to 60% by mass. Next, while stirring, 1.2 parts by mass of a methanol solution containing sodium methylate (28% by mass with respect to the total mass of the solution) was added dropwise, the external bath was adjusted so that the solution temperature was 55°C, and the blocking reaction was carried out at 55°C for 6 hours or longer. After confirming the disappearance of the isocyanate group peak by infrared spectroscopy (IR), blocked polyisocyanate component B-14 was obtained.

### [Example 1]

### (Preparation of blocked polyisocyanate composition BL-a1)

In a four-necked flask equipped with a thermometer, stirring blades and a reflux condenser, 25 parts by mass of the blocked polyisocyanate component A-1 obtained in Synthesis Example 2-1 and 75 parts by mass the blocked polyisocyanate component B-1 obtained in Synthesis Example 3-1 were charged under a nitrogen stream, the external bath was adjusted so that the solution temperature was 40°C, and mixed at 40°C for 1 hour or longer to obtain a blocked polyisocyanate composition BL-a1.

### [Examples 2 to 15, 18 to 23 and Comparative Example 3]

### (Preparation of blocked polyisocyanate compositions BL-a2 to BL-a15, BL-a18 to BL-a23, and BL-b3)

Each blocked polyisocyanate composition was manufactured using the same method as in Example 1, except that the combinations and mixing ratios of blocked polyisocyanate component (A) and blocked polyisocyanate component (B) to be blended were as shown in Tables 1 to 4.

### [Example 16]

### (Preparation of blocked polyisocyanate composition BL-a16)

In a four-necked flask equipped with a thermometer, stirring blades and a reflux condenser, 25 parts by mass of the blocked polyisocyanate component A-1 obtained in Synthesis Example 2-1 and 75 parts by mass the blocked polyisocyanate component B-1 obtained in Synthesis Example 3-1 were charged under a nitrogen stream, the external bath was adjusted so that the solution temperature was 40°C, and mixed at 40°C for 1 hour or longer. After that, 2.0 parts by mass of an anionic surfactant (polyoxyethylene polycyclic phenyl ether ammonium sulfate salt (ammonium sulfate salt of polyoxyethylene (oxyethylene repeating number n = 10 to 15) alkyl (carbon number C of alkyl group = 1, 8, 9) (mono to penta)styryl-phenyl ether (surface tension at 25°C: 40.3 mN/m)) was added and mixed for 15 minutes to obtain a blocked polyisocyanate composition BL-a16.

### [Example 17]

### (Preparation of blocked polyisocyanate composition BL-a17)

In a four-necked flask equipped with a thermometer, stirring blades and a reflux condenser, 25 parts by mass of the blocked polyisocyanate component A-1 obtained in Synthesis Example 2-1 and 75 parts by mass the blocked polyisocyanate component B-1 obtained in Synthesis Example 3-1 were charged under a nitrogen stream, the external bath was adjusted so that the solution temperature was 40°C, and mixed at 40°C for 1 hour or longer. After that, 2.0 parts by mass of a nonionic surfactant (manufactured by Nippon Nyukazai Co., Ltd., "Newcol 714" (trade name), polyoxyethylene polycyclic phenyl ether, HLB = 15.0) was further added and mixed for 15 minutes to obtain a blocked polyisocyanate composition BL-a17 was obtained.

### [Comparative Example 1]

### (Preparation of blocked polyisocyanate composition BL-b1)

The blocked polyisocyanate component A-4 obtained in Synthesis Example 2-4 was used as it was as a blocked polyisocyanate composition BL-b1.

### [Comparative Example 2]

### (Preparation of blocked polyisocyanate composition BL-b2)

The blocked polyisocyanate component B-6 obtained in Synthesis Example 3-6 was used as it was as a blocked polyisocyanate composition BL-b2.

### [Comparative Example 4]

### (Preparation of blocked polyisocyanate composition BL-b4)

The blocked polyisocyanate component B-8 obtained in Synthesis Example 3-8 was used as it was as a blocked polyisocyanate composition BL-b4.

### [Comparative Example 5]

### (Preparation of blocked polyisocyanate composition BL-b5)

The blocked polyisocyanate component B-9 obtained in Synthesis Example 3-9 was used as it was as a blocked polyisocyanate composition BL-b5.

The results of various evaluations using each blocked polyisocyanate composition obtained in Examples and Comparative Examples are shown in Tables 1 to 4 below.

**[Table 1]**

| | | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Blocked polyisocyanate composition | | | | BL-a1 | BL-a2 | BL-a3 | BL-a4 | BL-a5 | BL-a6 | BL-a7 | BL-a8 |
| | Component (A) | Type | | A-1 | A-1 | A-2 | A-1 | A-1 | A-1 | A-1 | A-1 |
| | | Polyisocyanate | Type | P-1 | P-1 | P-1 | P-1 | P-1 | P-1 | P-1 | P-1 |
| | | Nonionic hydrophilic group | Type | MPG081 | MPG081 | MPG081 | MPG081 | MPG081 | MPG081 | MPG081 | MPG081 |
| | | | Modification amount (mol%) | 30 | 30 | 10 | 30 | 30 | 30 | 30 | 30 |
| | | | Composition ratio (mass%) | 35.3 | 35.3 | 14.2 | 35.3 | 35.3 | 35.3 | 35.3 | 35.3 |
| | | Blocked isocyanate structure | Type | (III) | (III) | (III) | (III) | (III) | (III) | (III) | (III) |
| | | | Modification amount (mol%) | 70 | 70 | 90 | 70 | 70 | 70 | 70 | 70 |
| | | [Physical property 7-11 Curing temperature when gel fraction reaches 80% (°C) | | 90 | 90 | 90 | 90 | 90 | 90 | 90 | 90 |
| | | [Physical property 7-2] Curing temperature when gel fraction reaches 80% (°C) | | 85 | 85 | 85 | 85 | 85 | 85 | 85 | 85 |
| Composition | Component (B) | Type | | B-1 | B-2 | B-3 | B-3 | B-3 | B-3 | B-3 | B-4 |
| | | Polyisocyanate | Type | P-1 | P-1 | P-1 | P-1 | P-1 | P-1 | P-1 | P-1 |
| | | Nonionic hydrophilic group | Type | - | MPG081 | MPG081 | MPG081 | MPG081 | MPG081 | MPG081 | MPG081 |
| | | | Modification amount (mol%) | 0 | 0.25 | 2 | 2 | 2 | 2 | 2 | 4 |
| | | | Composition ratio (mass%) | 0 | 0.4 | 3.1 | 3.1 | 3.1 | 3.1 | 3.1 | 6.1 |
| | | Blocked isocyanate structure | Type | (II) | (II) | (II) | (II) | (II) | (II) | (II) | (II) |
| | | | Modification amount (mol%) | 100 | 99.75 | 98 | 98 | 98 | 98 | 98 | 96 |
| | | Ratio of structure (II-1) (mol%) | | 54 | 54 | 54 | 54 | 54 | 54 | 54 | 54 |
| | | [Physical property 7-1] Curing temperature when gel fraction reaches 80% (°C) | | 80 | 80 | 80 | 80 | 80 | 80 | 80 | 80 |
| | | [Physical property 7-2] Curing temperature when gel fraction reaches 80% (°C) | | 80 | 80 | 80 | 80 | 80 | 80 | 80 | 80 |
| | Component (A)/Component (B) | | Mixing ratio (Mass ratio) | 25/75 | 24/76 | 77/23 | 18/82 | 27173 | 42/58 | 57/43 | 19/81 |
| Physical property | Nonionic hydrophilic group | | Composition ratio (mass%) | 8.8 | 8.8 | 11.7 | 8.8 | 11.7 | 16.6 | 21.4 | 11.7 |
| | Effective NCO% (mass%) | | | 5.2 | 5.2 | 5 | 5.3 | 5 | 4.6 | 4.2 | 5 |
| | Solid content (mass%) | | | 60 | 60 | 60 | 60 | 60 | 60 | 60 | 60 |
| Evaluation | Dispersibility | | | Δ | Δ | ○ | ○ | ○ | ⊚ | ⊚ | ⊚ |
| | Low-temperature curability | | | ○ | ○ | ○ | ○ | ○ | ○ | ○ | ○ |
| | Amount of gas generated during storage | | | Δ | Δ | ○ | Δ | ○ | ○ | ○ | Δ |
| | Low-temperature curability after storage | | | Δ | Δ | ○ | Δ | ○ | ○ | ○ | Δ |
| | Gel fraction retention rate | | | Δ | Δ | ○ | ○ | ○ | ○ | ○ | Δ |
| | Water resistance | | | ○ | ○ | ○ | ○ | ○ | Δ | Δ | Δ |

**[Table 2]**

| | | | | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|
| Blocked polyisocyanate composition | | | | BL-a9 | BL-a10 | BL-a11 | BL-a12 | BL-a13 | BL-a14 | BL-al5 | BL-a16 |
| | Component (A) | Type | | A-1 | A-3 | A-1 | A-4 | A-4 | A-5 | A-2 | A-4 |
| | | Polyisocyanate | Type | P-1 | P-1 | P-1 | P-1 | P-1 | P-1 | P-1 | P-1 |
| | | Nonionic hydrophilic group | Type | MPG081 | MPG081 | MPG081 | MPG081 | MPG081 | MPG081 MPG130 | MPG081 | MPG081 |
| | | | Modification amount (mol%) | 30 | 30 | 30 | 6 | 6 | 10 | 10 | 6 |
| | | | Composition ratio (mass%) | 35.3 | 40.3 | 35.3 | 8.8 | 8.8 | 13.2 | 14.2 | 8.8 |
| | | Blocked isocyanate structure | Type | (III) | (IV) | (III) | (III) | (III) | (III) | (III) | (III) |
| | | | Modification amount (mol%) | 70 | 70 | 70 | 94 | 94 | 90 | 90 | 94 |
| | | [Physical property 7-1] Curing temperature when gel fraction reaches 80% (°C) | | 90 | 130 | 90 | 90 | 90 | 90 | 90 | 90 |
| | | [Physical property 7-2] Curing temperature when gel fraction reaches 80% (°C) | | 85 | 150 | 85 | 85 | 85 | 85 | 85 | 85 |
| | Component (B) | Type | | B-5 | B-3 | B-7 | B-2 | B-2 | B-3 | B-8 | B-2 |
| Composition | | Polyisocyanate | Type | P-2 | P-1 | P-1 | P-1 | P-1 | P-1 | P-1 | P-1 |
| | | Nonionic hydrophilic group | Type | MPG081 | MPG081 | MPG081 | MPG081 | MPG081 | MPG081 | MPG081 MPG130 | MPG081 |
| | | | Modification amount (mol%) | 4 | 2 | 2 | 0.25 | 0.25 | 2 | 6 | 0.25 |
| | | | Composition ratio (mass%) | 6.6 | 3.1 | 4.4 | 0.4 | 0.4 | 3.1 | 8.4 | 0.4 |
| | | Blocked isocyanate structure | Type | (II) | (II) | (I) | (II) | (II) | (II) | (II) | (II) |
| | | | Modification amount (mol%) | 96 | 98 | 98 | 99.75 | 99.75 | 98 | 94 | 99.75 |
| | | Ratio of structure (II-1) (mol%) | | 54 | 54 | - | 54 | 54 | 54 | 54 | 54 |
| | | [Physical property 7-1] Curing temperature when gel fraction reaches 80% (°C) | | 85 | 80 | 80 | 80 | 80 | 80 | 80 | 80 |
| | | [Physical property 7-2] Curing temperature when gel fraction reaches 80% (°C) | | 80 | 80 | 80 | 80 | 80 | 80 | 80 | 80 |
| | Component (A)/Component (B) | | Mixing ratio (Mass ratio) | 18/82 | 23/77 | 40/60 | 32/68 | 14/86 | 30/70 | 7/93 | 32/68 |
| Physical property | Nonionic hydrophilic group | | Composition ratio (mass%) | 11.7 | 11.7 | 16.6 | 3.1 | 1.6 | 6.1 | 8.8 | 3.1 |
| | Effective NCO% (mass%) | | | 5.5 | 5.2 | 5.6 | 5.7 | 5.8 | 5.5 | 5.3 | 5.7 |
| | Solid content (mass%) | | | 60 | 60 | 60 | 60 | 60 | 60 | 60 | 60 |
| Evaluation | Dispersibility | | | ○ | ○ | ⊚ | Δ | Δ | ○ | ○ | ○ |
| | Low-temperature curability | | | Δ | ○ | ○ | ○ | ○ | ○ | ○ | ○ |
| | Amount of gas generated during storage | | | Δ | Δ | ○ | ○ | Δ | ○ | ○ | ○ |
| | Low-temperature curability after storage | | | Δ | ○ | ○ | ○ | Δ | ○ | ○ | ○ |
| | Gel fraction retention rate | | | ○ | ○ | ○ | ○ | Δ | ○ | ○ | ○ |
| | | | | Δ | ○ | Δ | ⊚ | ⊚ | ○ | ○ | ⊚ |

**[Table 3]**

| | | | | Ex. 17 | Ex. 18 | Ex. 19 | Ex. 20 | Ex. 21 | Ex. 22 | Ex. 23 |
|---|---|---|---|---|---|---|---|---|---|---|
| Blocked polyisocyanate composition | | | | BL-a17 | BL-a18 | BL-a19 | BL-a20 | BL-a21 | BL-a22 | BL-a23 |
| | Component (A) | Type | | A-4 | A-2 | B-10 | A-1 | A-1 | A-1 | A-1 |
| | | Polvisocvanate | Type | P-1 | P-1 | P-1 | P-1 | P-1 | P-1 | P-1 |
| | | Nonionic hydrophilic group | Type | MPG081 | MPG081 | MPG081 | MPG081 | MPG081 | MPG081 | MPG081 |
| | | | Modification amount (mol%) | 6 | 10 | 30 | 30 | 30 | 30 | 30 |
| | | | Composition ratio (mass%) | 8.8 | 14.2 | 35.3 | 35.3 | 35.3 | 35.3 | 35.3 |
| | | Blocked isocyanate structure | Type | (III) | (III) | (II) | (III) | (III) | (III) | (III) |
| | | | Modification amount (mol%) | 94 | 90 | 70 | 70 | 70 | 70 | 70 |
| | | [Physical property 7-1] Curing temperature when gel fraction reaches 80% (°C) | | 90 | 90 | 80 | 90 | 90 | 90 | 90 |
| | | [Physical property 7-2] Curing temperature when gel fraction reaches 80% (°C) | | 85 | 85 | 80 | 85 | 85 | 85 | 85 |
| | Component (B) | Type | | B-2 | B-9 | B-3 | B-11 | B-12 | B-13 | B-14 |
| Composition | | Polvisocvanate | Type | P-1 | P-1 | P-1 | P-1 | P-1 | P-1 | P-1 |
| | | Nonionic hydrophilic group | Type | MPG081 | EO-PO | MPG081 | MPG081 | MPG081 | MPG081 | MPG081 |
| | | | Modification amount (mol%) | 0.25 | 6 | 2 | 2 | 2 | 2 | 2 |
| | | | Composition ratio (mass%) | 0.4 | 7.9 | 3.1 | 3.1 | 3.1 | 3.1 | 2.9 |
| | | Blocked isocyanate structure | Type | (II) | (II) | (II) | (II) | (II) | (II) | (II) |
| | | | Modification amount (mol%) | 99.75 | 94 | 98 | 98 | 98 | 98 | 98 |
| | | Ratio of structure (II-1) (mol%) | | 54 | 54 | 54 | 5 | 25 | 74 | 100 |
| | | [Physical property 7-1] Curing temperature when gel fraction reaches 80% (°C) | | 80 | 80 | 80 | 80 | 80 | 80 | 80 |
| | | [Physical property 7-2] Curing temperature when gel fraction reaches 80% (°C) | | 80 | 80 | 80 | 80 | 80 | 80 | 80 |
| | Component (A)/Component (B) | | Mixing ratio (Mass ratio) | 32/68 | 14/86 | 18/82 | 18/82 | 18/82 | 18/82 | 18/82 |
| Physical property | Nonionic hydrophilic group | | Composition ratio (mass%) | 3.1 | 8.8 | 8.8 | 8.8 | 8.8 | 8.8 | 8.8 |
| | Effective NCO% (mass%) | | | 5.7 | 5.3 | 5.2 | 5.2 | 5.2 | 5.2 | 5 |
| | Solid content (mass%) | | | 60 | 60 | 60 | 60 | 60 | 60 | 60 |
| Evaluation | Dispersibility | | | ○ | ○ | ○ | ○ | ○ | ○ | ○ |
| | Low-temperature curability | | | ○ | ○ | ○ | Δ | ○ | ○ | ○ |
| | Amount of gas generated during storage | | | ○ | ○ | Δ | Δ | Δ | Δ | Δ |
| | Low-temperature curability after storage | | | ○ | ○ | Δ | Δ | Δ | Δ | Δ |
| | Gel fraction retention rate | | | ○ | ○ | Δ | ○ | ○ | ○ | Δ |
| | Water resistance | | | ⊚ | ○ | ○ | ○ | ○ | ○ | ○ |

**[Table 4]**

| | | | | Com. Ex. 1 | Com. Ex. 2 | Com. Ex. 3 | Com. Ex. 4 | Com. Ex. 5 |
|---|---|---|---|---|---|---|---|---|
| Blocked polyisocyanate composition | | | | BL-b1 | BL-b2 | BL-b3 | BL-b4 | BL-b5 |
| Composition | Component (A) | Type | | A-4 | | A-4 | | |
| | | Polvisocvanate | Type | P-1 | | P-1 | | |
| | | Nonionic hydrophilic group | Type | MPG081 | | MPG081 | | |
| | | | Modification amount (mol%) | 6 | | 6 | | |
| | | | Composition ratio (mass%) | 8.8 | | 8.8 | | |
| | | Blocked isocyanate structure | Type | (III) | | (III) | | |
| | | | Modification amount (mol%) | 94 | | 94 | | |
| | | [Physical property 7-1] Curing temperature when gel fraction reaches 80% (°C) | | 90 | | 90 | | |
| | | [Physical property 7-2] Curing temperature when gel fraction reaches 80% (°C) | | 85 | | 85 | | |
| | Component (B) | Type | | | B-6 | B-6 | B-8 | B-9 |
| | | Polvisocvanate | Type | | P-1 | P-1 | P-1 | P-1 |
| | | Nonionic hydrophilic group | Type | | MPG081 | MPG081 | MPG081 MPG130 | EO-PO |
| | | | Modification amount (mol%) | | 6 | 6 | 6 | 6 |
| | | | Composition ratio (mass%) | | 8.8 | 8.8 | 8.4 | 7.9 |
| | | Blocked isocyanate structure | Type | | (II) | (II) | (II) | (II) |
| | | | Modification amount (mol%) | | 94 | 94 | 94 | 94 |
| | | Ratio of structure (II-1) (mol%) | | | 54 | 54 | 54 | 54 |
| | | [Physical property 7-1] Curing temperature when gel fraction reaches 80% (°C) | | | 80 | 80 | 80 | 80 |
| | | [Physical property 7-2] Curing temperature when gel fraction reaches 80% (°C) | | | 80 | 80 | 80 | 80 |
| | Component (A)/Component (B) | | Mixing ratio (Mass ratio) | 100/0 | 0/100 | 18/82 | 0/100 | 0/100 |
| Physical property | Nonionic hydrophilic group | | Composition ratio (mass%) | 8.9 | 8.8 | 8.8 | 8.4 | 7.9 |
| | Effective NCO% (mass%) | | | 5.2 | 5.2 | 5.2 | 5.3 | 5.0 |
| | Solid content (mass%) | | | 60 | 60 | 60 | 60 | 60 |
| Evaluation | Dispersibility | | | Δ | Δ | Δ | Δ | Δ |
| | Low-temperature curability | | | × | ○ | ○ | ○ | ○ |
| | Amount of gas generated during storage | | | ○ | × | Δ | × | × |
| | Low-temperature curability after storage | | | ○ | × | × | × | × |
| | Gel fraction retention rate | | | ○ | × | × | × | × |
| | Water resistance | | | × | ○ | ○ | ○ | ○ |

As shown in Tables 1 to 4, the blocked polyisocyanate compositions BL-a1 to BL-a23 (Examples 1 to 23) containing component (A) and component (B), wherein the content of nonionic hydrophilic groups in the blocked polyisocyanate composition is within a specific range, the content of nonionic hydrophilic groups in component (A) is higher than the content of nonionic hydrophilic groups in component (B), the blocked isocyanate structure of component (A) and the blocked isocyanate structure of component (B) are different from each other, and the curing temperature at which the gel fraction achieves 80% by mass or more is higher for component (A) than component (B), showed good dispersibility in a water-based resin composition, a small amount of gas generation when stored as a water-based resin composition, excellent low-temperature curability before and after storage, excellent curability maintenance (gel fraction retention rate), and excellent water resistance when formed into a resin film.

Further, when comparing the blocked polyisocyanate compositions BL-a1, BL-a2, and BL-a5 (Examples 1, 2, and 5), in which the mixing ratios between component (A) and component (B) were approximately the same at 24/76 to 27/73, but the contents of nonionic hydrophilic groups in components (b) were different, there was a tendency that as the content of nonionic hydrophilic groups in component (B) increased, the dispersibility in a water-based resin composition and low-temperature curability after storage was improved, the curability maintenance (gel fraction retention rate) was improved, and the gas generation amount when stored as a water-based resin composition was decreased.

When comparing the blocked polyisocyanate compositions BL-a4 and BL-a8 (Examples 4 and 8), in which the mixing ratios between component (A) and component (B) were approximately the same at 18/82 to 19/81, but the contents of nonionic hydrophilic groups in component (B) were different, there was a tendency that as the content of nonionic hydrophilic groups in component (B) increased, the dispersibility in a water-based resin composition was improved, and as the content of nonionic hydrophilic groups in component (B) decreased, the curability when formed into resin film was improved.

When comparing the blocked polyisocyanate compositions BL-a4 to BL-a7 (Examples 4 to 7) having different mixing ratios of component (A) and component (B), there was a tendency that as the mixing ratio of component (A) increased, the dispersibility in a resin composition, the gas generation amount when stored as a water-based resin composition, and low-temperature curability after storage were improved. On the other hand, there was a tendency that as the mixing ratio of component (B) increased, the curability when formed into a resin film was improved.

When comparing the blocked polyisocyanate composition BL-a8 and the blocked polyisocyanate composition BL-a9 (Examples 8 and 9) containing component (B) with different raw material polyisocyanate, there was a tendency that the blocked polyisocyanate composition BL-a8, which was formulated with component (B) using a raw material polyisocyanate having a large average number of isocyanate groups, showed improved dispersibility in a water-based resin composition and low-temperature curability.

When comparing the blocked polyisocyanate compositions BL-a12, BL-a16, and BL-a17 (Examples 12, 16 and 17) containing or not containing an anionic surfactant or a nonionic surfactant, there was a tendency that the dispersibility was improved when an anionic surfactant or a nonionic surfactant was added.

On the other hand, in the blocked polyisocyanate composition BL-b1 (Comparative Example 1) containing only component (A), the dispersibility in a water-based resin composition was good, the gas generation amount when stored as a water-based resin composition was small, and the low-temperature curability after storage was excellent, but the low-temperature curability and the water resistance when formed into a resin film were poor.

In the blocked polyisocyanate compositions BL-b2, BL-b4, and BL-b5 (Comparative Examples 2, 4, and 5) containing only component (B), the dispersibility in a water-based resin composition was good, the low-temperature curability when made into a resin composition and the water resistance when formed into a resin film were excellent, but the gas generation amount when stored was large, and the low-temperature curability after storage and the curability maintenance (gel fraction retention rate) were poor.

In the blocked polyisocyanate composition BL-b3(Comparative Example 3) containing component (A) and component (B), wherein the content of nonionic hydrophilic groups in component (A) was the same as the content of nonionic hydrophilic groups in component (B), the dispersibility in a water-based resin composition was good, the gas generation amount when stored as a water-based resin composition was small, and the low-temperature curability and the water resistance when formed into a resin film were excellent, but the low-temperature curability after storage and the curability maintenance (gel fraction retention) were unsatisfactory.

### [Industrial applicability]

According to the blocked polyisocyanate of the present embodiment, it is possible to provide a blocked polyisocyanate composition having good dispersibility in water-based resin compositions, excellent curability and curability maintenance (gel fraction retention rate) when baked at a low temperature of 90°C or lower immediately after being made into a water-based resin composition and after storage, ability to suppress gas generation when stored as a water-based resin composition, and excellent water resistance when formed into a resin film. The resin composition of the present embodiment contains the blocked polyisocyanate composition, and has excellent curability when baked at a low temperature of 90°C or lower immediately after production and after storage, excellent curability maintenance (gel fraction retention rate), ability to suppress gas generation when stored, and excellent water resistance when formed into a resin film. In addition, since the resin composition of the present embodiment has excellent low-temperature curability and curability maintenance (gel fraction retention rate), and can provide a resin film with excellent water resistance, it can be suitably used for coating materials with low heat resistance.

## Claims

1. A blocked polyisocyanate composition comprising blocked polyisocyanate component (A) and blocked polyisocyanate component (B), wherein
when a nonionic hydrophilic group content of blocked polyisocyanate component (A) is represented by (a) mass% and a nonionic hydrophilic group content of blocked polyisocyanate component (B) is represented by (b) mass%, a relationship of 0 ≤ (b) < (a) is satisfied.

2. The blocked polyisocyanate composition according to claim 1, wherein
the nonionic hydrophilic group content (a) of blocked polyisocyanate component (A) is 1.0 to 55.0% by mass,
the nonionic hydrophilic group content (b) of blocked polyisocyanate component (B) is 0 to 20.0% by mass,
(a)/(b) is 100/0 to 60/40, and
a mass ratio (A)/(B) of component (A) to component (B) is 1/99 to 99/1.

3. The blocked polyisocyanate composition according to claim 1 or 2, wherein
a nonionic hydrophilic group content of the blocked polyisocyanate composition is 0.1% by mass or more and 25.0% by mass or less with respect to a total mass of a solid content of the blocked polyisocyanate composition.

4. The blocked polyisocyanate composition according to claim 1 or 2, wherein
a blocked isocyanate group structure (X) of blocked polyisocyanate component (A) and a blocked isocyanate group structure (Y) of blocked polyisocyanate component (B) are different from each other.

5. The blocked polyisocyanate composition according to claim 1 or 2, wherein a relationship of 0 < (b) < (a) is satisfied.

6. The blocked polyisocyanate according to claim 4, wherein
when each of curing temperatures at which each of resin films using blocked polyisocyanate component (A) and blocked polyisocyanate component (B) achieves a gel fraction of 80% by mass or more is represented by (A_{T1}) and (B_{T1}), a relationship of (A_{T1}) > (B_{T1}) is satisfied,
the gel fraction is expressed as a percentage of a value obtained by dividing a mass of an undissolved portion of a resin film when the resin film is immersed in acetone at 23°C for 24 hours by a mass of the resin film before immersion, and
the resin film is obtained by a method in which each of blocked polyisocyanate component (A) and blocked polyisocyanate component (B) is blended with an acrylic polyol having a hydroxyl group content of 4.5% by mass at an NCO/OH ratio of 1.0 and adjusted to have a solid content of 50% by mass using butyl acetate, the NCO/OH ratio being a ratio of a molar amount of isocyanate groups of blocked polyisocyanate component (A) or blocked polyisocyanate component (B) to a molar amount of hydroxyl groups of the acrylic polyol, followed by applying each of the adjusted resulting solutions to a polypropylene plate so that the dried film thickness is 40 µm and heating at a temperature of 80°C or higher at an interval of 5°C for 30 minutes to dry.

7. The blocked polyisocyanate according to claim 4, wherein
when each of curing temperatures at which each of resin films using blocked polyisocyanate component (A) and blocked polyisocyanate component (B) achieves a gel fraction of 80% by mass or more is represented by (A_{T2}) and (B_{T2}), a relationship of (A_{T2}) > (B_{T2}) is satisfied,
the gel fraction is expressed as a percentage of a value obtained by dividing a mass of an undissolved portion of a resin film when the resin film is immersed in acetone at 23°C for 24 hours by a mass of the resin film before immersion, and
the resin film is obtained by a method in which each of blocked polyisocyanate component (A) and blocked polyisocyanate component (B) is blended with a polycaprolactone triol having a number-average molecular weight of 850 at an NCO/OH ratio of 1.0 and adjusted to have a solid content of 50% by mass using butyl acetate, the NCO/OH ratio being a ratio of a molar amount of isocyanate groups of blocked polyisocyanate component (A) or blocked polyisocyanate component (B) to a molar amount of hydroxyl groups of the polycaprolactone triol, followed by applying each of the adjusted resulting solutions to a polypropylene plate so that the dried film thickness is 40 µm and heating at a temperature of 80°C or higher at an interval of 5°C for 30 minutes to dry.

8. The blocked polyisocyanate composition according to claim 4, wherein
the blocked isocyanate group structure (Y) of blocked polyisocyanate component (B) is at least one structure selected from the group consisting of a structure represented by the following general formula (I) and a structure represented by the following general formula (11), and
when the blocked isocyanate group structure (Y) of blocked polyisocyanate component (B) is at least one structure selected from the group consisting of structures represented by the following general formula (11), a content of the structure represented by the following general formula (II-1) is 1 mol% or more with respect to 100 mol% of the structure represented by the following general formula (II), 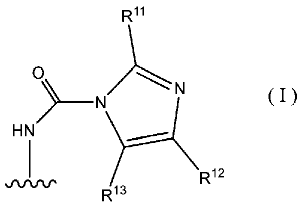
in general formula (1), R¹¹, R¹² and R¹³ are each independently a hydrogen atom or an alkyl group optionally containing one or more substituents selected from the group consisting of a hydroxyl group and an amino group, a total number of carbon atoms of R¹¹, R¹² and R¹³ is 1 or more and 20 or less, and the wavy line represents a bonding site, 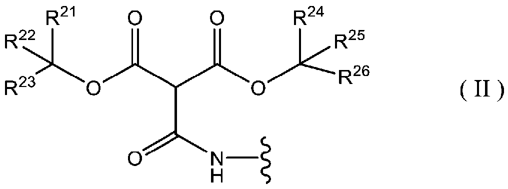
in general formula (II), R²¹, R²², R²³, R²⁴, R²⁵ and R²⁶ are each independently a hydrogen atom, or an alkyl group optionally containing one more substituents selected from the group consisting of a hydroxyl group and an amino group, and the wavy line represents a bonding site, 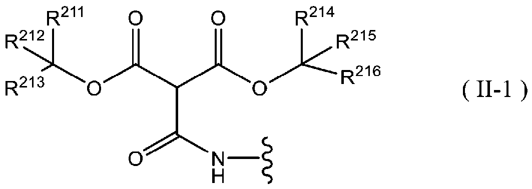
in general formula (II-1), R²¹¹, R²¹² and R²¹³ are each independently an alkyl group optionally containing one or more substituents selected from the group consisting of a hydroxyl group and an amino group, a total number of carbon atoms of R²¹¹, R²¹² and R²¹³ is 3 or more and 20 or less, R²¹⁴, R²¹⁵ and R²¹⁶ are each independently a hydrogen atom, or an alkyl group optionally containing one or more substituents selected from the group consisting of a hydroxyl group and an amino group, and the wavy line represents a bonding site.

9. The blocked polyisocyanate composition according to claim 8, wherein one of R²⁴, R²⁵ and R²⁶ in general formula (II) is a hydrogen atom.

10. The blocked polyisocyanate composition according to claim 8, wherein in the general formula (II-1), a total number of carbon atoms of R²¹¹, R²¹² and R²¹³ is 4 or more and 20 or less.

11. The blocked polyisocyanate composition according to claim 4, wherein
the blocked isocyanate group structure (X) of blocked polyisocyanate component (A) is at least one structure selected from the group consisting of a structure represented by the following general formula (III) and a structure represented by the following general formula (IV), 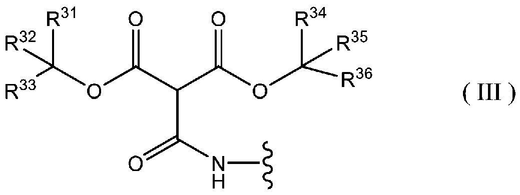
in general formula (III), R³¹, R³², R³³, R³⁴, R³⁵ and R³⁶ are each independently a hydrogen atom, or an alkyl group optionally containing one or more substituents selected from the group consisting of a hydroxyl group and an amino group, at least one of R³¹, R³² and R³³ is a hydrogen atom, at least one of R³⁴, R³⁵ and R³⁶ is a hydrogen atom, and the wavy line represents a bonding site with a residue of polyisocyanate with an isocyanate group removed, 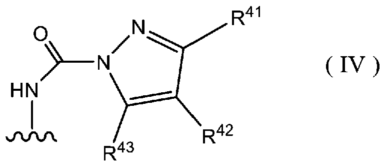
in general formula (IV), R⁴¹, R⁴² and R⁴³ are each independently a hydrogen atom or an alkyl optionally containing one or more substituents selected from the group consisting of a hydroxyl group and an amino group, and the wavy line represents a bonding site with a residue of polyisocyanate with an isocyanate group removed.

12. The blocked polyisocyanate composition according to claim 4, wherein
blocked polyisocyanate component (A) and blocked polyisocyanate component (B) are each derived from a polyisocyanate and a blocking agent, and
the polyisocyanate is a polyisocyanate derived from one or more diisocyanates selected from the group consisting of an aliphatic diisocyanate and an alicyclic diisocyanate.

13. The blocked polyisocyanate composition according to claim 12, wherein the polyisocyanate has an average number of isocyanate groups of 3.5 or more.

14. The blocked polyisocyanate composition according to claim 1 or 2, wherein
the blocked isocyanate group structure (X) of blocked polyisocyanate component (A) is the same as the blocked isocyanate group structure (Y) of blocked polyisocyanate component (B).

15. A resin composition comprising the blocked polyisocyanate composition according to claim 4 and a polyhydric hydroxy compound.

16. A resin film obtained by curing the resin composition according to claim 15.

17. A laminate obtained by laminating one or more layers of the resin film according to claim 16 on a substrate, wherein the resin film has a thickness of 1 µm or more and 50 µm or less per layer.
